# EUROPÄISCHE PATENTSCHRIFT

(11) **EP 1 913 211 B1**
(45) Veröffentlichungstag und Bekanntmachung des Hinweises auf die Patenterteilung: **06.10.2010**
(21) Anmeldenummer: 06721199.5
(22) Anmeldetag: 06.04.2006
(51) Int. Cl.: E04C 2/12, E04C 2/24, B32B 21/00

(54) **BAUPLATTE ODER DERGLEICHEN, DEREN HERSTELLUNG UND VERWENDUNG**
BUILDING PANEL OR THE LIKE, AND PRODUCTION AND USE THEREOF
PLAQUE DE CONSTRUCTION OU SIMILAIRE, PROCÉDÉ DE FABRICATION ET UTILISATION

(30) Priorität: 28.10.2005 AT 17642005
(43) Veröffentlichungstag der Anmeldung: 23.04.2008
(73) Patentinhaber: Berger, Johann, 3323 Neustadtl/Donau (AT)
(72) Erfinder: Berger, Johann, 3323 Neustadtl/Donau (AT)
(74) Vertreter: Wildhack & Jellinek
(86) Internationale Anmeldenummer: PCT/AT2006/000141
(87) Internationale Veröffentlichungsnummer: WO 2007/048149

(56) Entgegenhaltungen:
- EP-A- 0 038 041
- WO-A-95/32082
- DE-U1- 9 302 447
- FR-A- 2 289 691

## Beschreibung

Die vorliegende Erfindung betrifft eine neue Bauplatte bzw. ein neues Bauelement, insbesondere Struktur-, Wandungs-, Verkleidungs- oder Trägerelement mit Mehrschichtaufbau, welche(s) mit zwei voneinander beabstandet und zueinander parallel angeordneten Deckschichten und mindestens einer zwischen denselben angeordneten und mit ihnen verbundenen Kernschicht aus Holz gebildet ist, sowie die Herstellung und Verwendung der neuen Platte.

Es ist eine große Anzahl von nach verschiedenen Grundsätzen aufgebauten im Wesentlichen platten- und/oder balkenartigen Bau-, Struktur-, Trag-, Wandungs- und/oder Verkleidungselementen für verschiedene Zwecke, wie für den Einbau in schon vorhandene Baustrukturen vorgesehene Bauelemente od. dgl. mit Schichtaufbau für Neubau, Ausbau, Sanierung, Ausstattung od. dgl. von Gebäuden, Bauwerken, Bauten u. dgl. sowie für mobile Bauten, Trennelemente od. dgl., wie sie z.B. für Ausstellungen, Messen, Präsentationen, Märkte od. dgl. Verwendung finden, sowie weiters insbesondere für Platten für die Ausstattung von Bauten und für Trennelemente in Bauten, mit Wärme- und Schallschutz-Verkleidungen od. dgl., für den Möbel- und Messebausektor sowie für Ver- und Auskleidungselemente im Fahrzeug- und Boots- bzw. Schiffbau, für die Ausstattung von Wohnwägen, Wohnmobilen od. dgl. oder aber auch für Bau- und Konstruktions-Hilfseinrichtungen, wie Schalungen im Hochbau u. dgl., bekannt geworden und kommen heute in großem und immer noch steigendem Umfang zum Einsatz.

Die WO 95/32082 A1 (D1) zeigt in den Fig. 3 und 4 ein Holzbauelement bzw. zwei Lagen einer Kernschicht desselben, wobei in den oberen und in den unteren Hauptflächen zweier Bretter zueinander parallele langgezogene Nuten eingearbeitet sind, welche untereinander gleiche Querschnittsflächen aufweisen und in gleichen Abständen voneinander angeordnet sind.

Die Bretter sind derart aus den Holzstämmen herausgeschnitten, dass die Holzfasern die gleiche Erstreckungs-Richtung aufweisen wie die Längserstreckung der Bretter selbst und wie die Erstreckung der oberen und der unteren Hauptflächen derselben.

Es ist also der Verlauf der Holzfasern parallel zu jeder der Hauptflächen und er ist senkrecht zu den vorderen und hinteren schmalen Querflächen.

Dort sind weiters die sich längserstreckenden Nuten, also die "Hohlräume" bzw. deren nicht-horizontalen "schrägen" Längs-Wände in einem spitzen Winkel von kleiner als 90° zu den Hauptflächen geneigt, also "schräg" ausgerichtet.

Würden nun auf die obere Hauptfläche des ersten oberen, beidseitig genuteten Brettes eine obere horizontale Deckschicht und auf das untere, ebenfalls schrägwandig genutete Brett auf dessen unterseitige Hauptfläche eine untere Deckschicht aufgebracht und die Bretter flächig aneinander gebunden, so würde eine Bauplatte mit einer Kernschicht entstehen, welche haupt- und deckflächen-parallele langgestreckte Nutform und "schräge" Seitenwände aufweisende, zu den beiden Deckschichten schräg ausgerichtete Hohlräume aufweisen und die Holzfasern würden selbstverständlich weiterhin parallel zu den Deckschichten verlaufen.

Gemäß dieser WO-A1, werden die Bretter genutet und bleiben in ihrer Horizontal-Lage in der mit ihnen gebildeten Kernschicht erhalten. Sie bleiben unversehrt in ihrer Länge, werden also nicht in quer zu der Längs-Erstreckung verlaufende Leisten zerschnitten und sie bilden dort in ihrer horizontalen Lage miteinander verbunden die Kernschicht der Bauelemente.

Die jeweils vorgegebene Dicke der Bretter bleibt in der Kernschicht des Bauelements unverändert erhalten. Beim flächigen Zusammenleimen von zwei oder mehr dieser Bretter zur Kernschicht, kann dieselbe z.B. nur die zweifache oder mehrfache Dicke der Bretter aufweisen.

Der wesentliche Nachteil dieser bekannten Bauelemente gemäß der WO-A1 besteht darin, dass die parallelen langgezogenen Nuten eine ungehinderte Bewegung der in ihnen enthaltenen Luft ermöglichen, sodass ein Wärmetransport entsteht und auf diese Weise die Isolierwirkung der Bauplatte wesentlich herabgesetzt ist.

Es ist nun auf Basis von in der Praxis gewonnenen konkreten Erfahrungen sowie von ausgedehnten Versuchsreihen im Rahmen entsprechender Entwicklungsarbeiten gelungen, neue Bauplatten bzw. Bauelemente od. dgl. der eingangs genannten Art mit wesentlich reduziertem Gewicht und wesentlich verbesserten Festigkeits-, Schall- und Wärmedämmwerten sowie sonstigen günstigen physikalischen, bautechnischen, bauphysikalischen und baubiologischen Eigenschaftswerten zu schaffen, welche sich insbesondere dann, wenn sie - wie in besonders bevorzugter Weise vorgesehen - aus oder zumindest überwiegend mit biogenen Materialien, also insbesondere mit natürlichen, also gewachsenen, Hölzern oder auf solchen beruhenden Holzwerkstoffen, erstellt sind, durch hohe Benutzungsqualität und Umweltfreundlichkeit und weiters durch biologische Abbaubarkeit und somit hohe Entsorgungsqualität auszeichnen.

Gegenstand der Erfindung sind nun wie eingangs erwähnte Bauplatten bzw. Bauelemente, wie insbesondere Trag-, Struktur-, Wandungs-, Verkleidungs- sowie Wärme-, Schall- und Feuer-Dämmelemente od. dgl. gemäß dem **Oberbegriff** des **Anspruches** 1, welche die im **kennzeichnenden Teil** dieses Anspruchs geoffenbarte(n) Merkmale bzw. Kombination von Merkmalen aufweisen.

Durch die erfindungsgemäß zwingend vorgesehene Ausrichtung der Fasern bzw. Faserung der Kernschicht quer, und zwar eben ausdrücklich nicht senkrecht, sondern ganz gezielt im spitzen Winkel zur Haupterstreckung der neuen Bauplatten ist bei vollem Erhalt der hohen mechanischen Festigkeit und Widerstandskraft, Schwingungsdämpfungs- und Wärmeisolier-Eigenschaften eine bauphysikalisch und baubiologisch wertvolle, ausgleichswirksame Querdiffusion von Feuchte u. dgl. ermöglicht und gleichzeitig ist eine besonders hohe mechanische Belastbarkeit und Tragfähigkeit der neuen Bauelemente insbesondere auch Flächenbelastbarkeit bei den neuen Bauplatte sichergestellt.

Die Neigung zur Schrumpfung oder Ausdehnung von Hölzern in Faserrichtung ist z.B. bei Änderung der Umgebungsfeuchte sehr gering und liegt maximal etwa bei 1 %, womit bei wechselnden Umgebungsbedingungen infolge der Schräge der Fasern eine dennoch relativ konstante Dicke der, vorzugsweise wesentlich höhere Dicke als die Deckschichten aufweisenden, Schrägfaser-Kernschicht und damit im Wesentlichen des gesamten Bauelements bzw. der gesamten neuen Bauplatte gewährleistet ist.

Die neue Bauplatte bzw. das neue Bauelement ermöglicht es im großen Ausmaß, für die im Vergleich zu dessen Deckschichten relativ dicke und somit relativ hohen Anteil am Gesamtvolumen derselben bzw. desselben einnehmende Kern-, also Schrägfaser-Schicht jeweils übliche und jeweils der Marktlage entsprechend möglichst kostengünstige und vorteilhafter Weise durchaus eher minderwertige Hölzer, Abfallhölzer und insbesondere auch Leichthölzer zu verwenden, wodurch sich jedenfalls gleich von vornherein wesentliche Kosteneinsparungen erzielen lassen, ohne dafür ins Gewicht fallende Einbußen hinsichtlich Stabilität und Festigkeit der neuen Bauplatten bzw. -elemente in Kauf nehmen zu müssen.

Ein wesentlicher weiterer Vorteil besteht darin, dass in Folge der "Schräg-Ausrichtung" der Fasern bzw. Faserung in der Schrägfaser-Schicht eben Hölzer mit relativ geringer Dichte und/oder Querfestigkeit Verwendung finden können, die jedoch dennoch gegen Einwirkung von Druck schräg zur Faserungsrichtung hoch stabil sind, womit mechanisch stabile Bauplatten mit bisher nicht erreichbaren geringen Raum-Dichten realisierbar sind, wobei auch die Materialstärke der neuen Platten, Träger u. dgl. gering gehalten werden kann, wenn dies erforderlich oder gewünscht ist. An dieser Stelle sei betont, dass der hier oft verwendete Begriff "Bauplatten" sich keineswegs nur auf Struktur-, Schalungs- und Verkleidungsplatten für Bauten bezieht, sondern darunter auch allgemein Platten für verschiedenste andere Zwecke, wie insbesondere für die Bau- und Raum-Ausstattungs-, Möbel- und Einrichtungsindustrie sowie für die verschiedensten Trag- und Trennelemente u. dgl. für Bau- und andere Zwecke, wie z.B. für Tonmöbel, zu verstehen sind.

Gemäß der im Rahmen des Anspruches 1 vorgesehenen Ausführungsform ist im Sinne einer heute immer mehr geforderten wesentlichen Reduzierung von Gewicht bzw. der Masse der neuen Bauplatte bzw. Bauelemente od. dgl. und einer dadurch wesentlich verbesserten Handhabungsfreundlichkeit und Mobilität derselben bei hoher Stabilität und mechanischer Festigkeit vorgesehen, dass die - mit Holz gebildete - Schrägfaser-Schicht mit einer Vielzahl von dieselbe voll durchsetzenden - mit der zur Erstreckung der Deckplatten, im Wesentlichen schrägen Ausrichtung der Schrägfasern bzw. -Faserung des diese Schicht bildenden Materials, vorzugsweise Holzes, zumindest im wesentlichen übereinstimmende insbesondere zu derselben parallele Ausrichtung aufweisenden - Schräg-Hohlräumen, -Ausnehmungen, -Fräsungen, -Bohrungen od. dgl. ausgebildet ist.

Der Vorteil dieser im Rahmen der Erfindung besonders bevorzugten Ausführungsform beruht darauf, dass gefunden wurde, dass durch die mit der schrägen Faser-Richtung konform ausgerichteten Schräg-Hohlräume in der Schrägfaser-Kernschicht eine wesentliche Reduzierung des Gewichtes der neuen Bauplatte erreichbar ist, jedoch - wie eventuell zu erwarten gewesen wäre - die Festigkeit der Platte keineswegs dramatisch sinkt. Darüber hinaus ist (Feuchte-)Querdiffusionsfähigkeit und der Feuchtigkeitsausgleich durch die Platte wesentlich gesteigert, was baubiologisch günstig ist.

Die **Ansprüche** 2 bis 6 betreffen verschiedene bevorzugte Ausführungsformen der neuen Bauplatten.

Dem **Anspruch** 7 sind nähere Angaben bezüglich der für den Bau, Qualität und Eigenschaften der neuen Bauplatten bzw. Bauelemente im Rahmen der Erfindung bevorzugten Ausführungsformen, der günstigen Formgebung und Verteilung der Vertikal-Hohlräume sowie bevorzugt einzuhaltender Maßverhältnisse zwischen Leerraumvolumen und Holzmasse in der Schrägfaser- bzw. Schräg hohlraum-Schicht zu entnehmen.

Ganz wesentliche Vorteile der neuen Bauplatten und deren Be- und Verarbeitung in der Praxis sind folgende: Infolge der Schrägstellung der Hohlräume und auch der Fasern und somit auch des verbleibenden Holzmaterials der Kernschicht können die Platten in üblicher gewohnter gleicher Weise wie Holz oder Holzfasermaterial bisher geschraubt, genagelt, gebohrt und bearbeitet werden, da z. B. jede Schraube in jedem Fall infolge der Schräglage der mehreren festen Holz-Stege zwischen den schrägen Schräg-Hohlräumen im Holzmaterial verankert wird. Wenn die Kernschicht mit "positiven" und "negativen" Schrägfaser- bzw. Schräghohlraum-Leisten gebildet ist, ist eine höhere Homogenität der Platten gesichert. Durch die Schräglage der Hohlräume ist auch die Decklage mit größeren Holzflächen der Kernschicht verbunden und bei geraden Schnitten ist die Gefahr, dass ein Hohlraum längs angeschnitten wird, nicht gegeben. Ganz wesentlich ist weiters, dass infolge der Schräglage des festen Holzmaterials, also der Stege zwischen den Hohlräumen das Holz auch an den Seitenflächen schräg liegt und daher mehr Holzmaterial für die Klebung der Seitenflanken der neuen Platten und auch an den kurzen Kanten derselben zur Verfügung steht und somit insbesondere auch die Kanten sehr stabil und fest sind.

Ganz wesentlich kann es bei Einsatz von Holz im Bauwesen sein, hohes Augenmerk auf den Brandschutz zu legen:

Mit der im **Anspruch** 8 beschriebenen Beschichtung der Innenwandungen der Schräg-Hohlräume mit einer Intumeszenz-Polymermasse, welche bloß in geringer Schichtdicke auf einfache Weise, vorzugsweise durch Sprühen aus in diese Hohlräume während des laufenden Produktionsprozesses kurzzeitig eingebrachte Düsen, erfolgen kann, wird im Brandfall eine hochsichere Brandhemmung durch Ausfüllung der Hohlräume mit dem in der Hitze aufschäumenden Polymer erreicht, insbesondere dadurch, dass jede Luftzufuhr unterbunden wird.

Weiters kann gemäß **Anspruch** 8 eine Füllung der Schräg-Hohlräume mit einem Schaumstoff besonders niedriger Dichte erfolgen, wodurch einerseits die Brandhemmung erhöht wird und andererseits ein die Leimung störendes Herausbröseln von Verarbeitungs-Rückstandspartikeln aus den Schräg-Hohlräumen verhindert wird.

Insbesondere in Hinblick auf eine kostengünstige Fertigung stellt im Rahmen der Erfindung der Einsatz von wie in dem Anspruch 9 im Detail beschriebenen Ausbildungsformen der Schrägfaser-Leisten für die Bildung der Schrägfaser- bzw. Schräghohlraum-Schicht der neuen Bauplatten bzw. Bauelemente besonders bevorzugte Merkmale dar.

Die **Ansprüche** 10 bis 12 offenbaren im Sinne einer weiteren Erhöhung der mechanischen Festigkeit und Verzugsfestigkeit günstige Ausführungsformen der neuen Bauplatte, bei welchen u.a. innerhalb der Schrägfaser-Schicht "aufrechtstehende", die Festigkeit erhöhende Versteifungs- bzw. Armierungs-Leisten, die bevorzugter Weise aus Holz bestehen, für welche jedoch in Sonderfällen auch andere Materialien, wie z. B. Kunststoffe oder Metalle - wie z.B. bei Sicherheitsplatten - in Frage kommen, angeordnet sind.

Der **Anspruch** 13 offenbart vorteilhafte Ausbildungsvarianten der Deckschichten relativ zu den Armierungsleisten und im Hinblick auf eine möglichst hohe Gewichtsreduktion vorteilhafte Holz-Materialien für die Schrägfaser-Schräghohlraum-Schicht der neuen Bauplatte, des neuen Bauelements, weiters betrifft er die für die Deckplatten der Bauplatten bevorzugt einzusetzenden untereinander gleichen oder verschiedenen Hölzer und die Abdeckung der Schmalseiten-Flanken der neuen Bauplatten bzw. Bauelemente.

Der **Anspruch** 14 hat eine gekrümmte Bauplatte zum Gegenstand, die für Wölbungen, Auskleidungen von Wölbungen oder Wandrundungen brauchbar ist.

Die Erfindung beschränkt sich weiters keineswegs auf Platten oder Borde für die verschiedensten schon genannten Zwecke, sie ist weiters auf Tragelemente, Träger od. dgl. im Bauwesen gerichtet, also auf sich überwiegend längs erstreckende Bauelemente mit Tragfunktion, welche die Vorteile hoher mechanischer Festigkeit, mit den sonstigen günstigen charakteristischen Eigenschaften von Holz in sich vereinen.

Der **Anspruch** 15 offenbart mehrere spezifisch zweckgerichtete und - erfüllende Formen der neuen Bauplatten bzw. Bauelemente, welche als Schallschluckelemente bzw. -platten oder als Schallgenerier-, Verstärkungs- bzw. Resonanzelemente im Beschallungs-, Tonwiedergabegeräte- und Instrumentenbau oder aber für einen ganz anderen Zweck, nämlich insbesondere für hochstabile Türblätter von einbruchssicheren Türen od. dgl. Einsatz finden können.

Da Schallschluckplatten gemäß Anspruch 15 in Wohn- und Arbeits-, wie z. B.

Studioräumen eingebaut werden, ist, da das Material dafür eben Holz ist, dem Brandschutz höchstes Augenmerk zu schenken: Es wurde nun gefunden, dass eine dünne Beschichtung der Innenwände der Schräg-Hohlräume der Schrägfaser-Schicht mit einem Brandschutz-Polymer, selbst dann, wenn die Dicke der - gänzlich aus Holz bestehenden - Platte nur 2 cm beträgt, und demnach deren Schräg-Hohlräume letztlich eine Tiefe von nur etwa 1,5 cm aufweisen, durchaus ausreicht, um problemlos eine Brandhemmwirkung zu erzielen, welche auf jeden Fall der Brandschutzklasse F90 (mindestens 90 min Brandhemmwirkung) entspricht, wobei jedoch in den meisten Fällen dieser Wert von F90 bei weitem übertroffen wird.

Im Zusammenhang mit dem Brandschutz der neuen Platten allgemein ist folgendes auszuführen:

Wenn z.B. in einem Gebäude die Decken mit aus Holz gefertigten Bauplatten gemäß der Erfindung z.B. in Sandwich-Bauweise mehrlagig ausgeführt sind, so genügt es, wie entsprechende Tests gezeigt haben, durchaus, auf der durch ein eventuelles Brandgeschehen betroffenen oder gefährdeten Seite, also z. B. bei Decken auf der Sicht- bzw. Unterseite, eine wie soeben beschriebene, mit dem Brandhemm-Polymer in den Schräg-Hohlräumen beaufschlagte dünne Platte der erfindungsgemäßen Grundbauart anzuordnen, und es ist auf diese einfache Weise der volle Brandschutz gegeben, obwohl die in mehreren Lagen die Decke selbst bildenden, z.B. aneinander-laminierten Bauplatten aus Holz durchaus keinerlei Brandschutz-Anstrich aufzuweisen brauchen. Selbstverständlich können auch auf beiden Seiten einer wie soeben beschriebenen Decke mit Brandhemm-Polymer versehene Brandschutz-Bauplatten angeordnet sein.

Was die im Anspruch 15 genannte besondere Ausführungsform der neuen Bauplatten betrifft, so ist dieselbe für tragende Böden, Decken oder Wandelemente, bei welchen erhöhter Brandschutz gefordert ist, besonders geeignet. Derartige Platten können auch z.B. im Eisenbahn-, Fahrzeug-, Schiffs- und Flugzeugbau verwendet werden, weiters für den Einbau in Verkehrsbauwerke, wie z.B. in Tunnels, für Sicherheits-Türblätter u. dgl.

Der **Anspruch** 16 betrifft im Rahmen der Erfindung besonders bevorzugte Ausbildungsvarianten von Wand-, Zwischenwand- oder Deckenelementen mit hoher Wärme- und Schalldämmwirkung unter Einsatz der erfindungsgemäßen Bauplatten, insbesondere in ihrer Grundform.

Im Sinne der obigen Ausführungen bezüglich der Erreichung höchster Brandschutz-Sicherheit ist eine Ausführungsform der Bauplatten bzw. Bauelemente gemäß dem **Anspruch** 17 besonders bevorzugt, wobei die gemäß "F90" geforderten Brandsicherheitswerte jedenfalls immer erreicht, jedoch meist bei weitem übertroffen werden, sodass sich jegliche Bedenken gegen den Basiswerkstoff Holz, der den neuen Bauplatten bzw. Bauelementen zu Grunde liegt, zerstreuen.

Was das gemäß diesem Anspruch vorteilhafter Weise einsetzbare schwer entflamm- und brennbare Holz betrifft, so ist hier der Vorteil gegeben, dass es durchaus genügt, für die Vertikalfaser-Schicht brandsicheres Holz, wie z. B. Eichenholz, das durchaus von minderer Qualität sein kann, einzusetzen, für welches sich sonst bis jetzt praktisch keine Verwendung finden ließ und das daher durchaus kostengünstig erhältlich ist.

Der **Anspruch** 18 betrifft weitere, auf jeweils spezielle Arten des Einsatzes im Bauwesen gerichtete, vorteilhafte Ausführungsformen von Wand-, oder Deckenelementen gemäß der Erfindung unter Einsatz der neuen Schräghohlraum-Bauplatten.

Dem **Anspruch** 18 ist ein mechanisch besonders stabiles, strukturgebendes, mit den hohe Schall- und Wärmedämmeigenschaften aufweisenden Bauplatten gemäß der Erfindung ausgestattetes Bauelement zu entnehmen.

Der **Anspruch** 19 hat wie oben beschriebene Wand- bzw. Deckenelemente bzw. -platten zum Gegenstand, bei deren Oberfläche für eine haftfeste Verbindung zu dem tragenden Beton od. dgl. hin - unter anderem mit einer Schrägfaser-Kernschicht gemäß der Erfindung als Adhäsions-Vermittlungsschicht und als Putzträger - gesorgt ist, die mit einer Putzschicht versehbar oder schon gleich mit einem fertigem Putzbelag versehen sind.

Der **Anspruch** 20 betrifft mit erfindungsgemäßen Bauplatten mit Wärme- und Schalldämmwirkung ausgestattete Wandungselemente od. dgl., welche in situ, also direkt, an der Einbaustelle erstellbar oder als Fertigelemente schon erstellt, einsetzbar sind.

In den Ansprüchen 19 und 20 ist auf die Möglichkeit des Einsatzes der Schräghohlraum-Kernschichten mit geringer Dicke ohne Deckplatten als Putzträger hingewiesen.

Der **Anspruch** 21 hat handhabungsfreundliche, sich durch geringes Gewicht auszeichnende Wandungselemente, Wandplatten od. dgl., zum Gegenstand, welche sich insbesondere für - für öfteren Ortswechsel vorgesehene Leichtbauten, Einbauten in Gebäude, für Ausstellungszwecke, für Messebauten u. dgl. eignen, und deren Sicht- bzw. Oberflächen-Ausgestaltung mit konventionellen Mitteln bzw. auf an sich bekannte Weise gebildet ist.

Die **Ansprüche** 22 bis 26 betreffen im Rahmen der Erfindung besonders vorteilhafte, sich durch hohe ökonomische Fertigungsweise auszeichnende Verfahren für die Herstellung von besonders günstigen Haupt-Ausführungsvarianten der neuen Bauplatten und zwar für die im Rahmen der Erfindung besonders bevorzugten Fälle, dass sie gesamtheitlich oder zumindest überwiegend mit Holz gebildet sind. Es soll hier kurz erwähnt sein, dass sich die Verfahrensweise gemäß diesen Ansprüchen trotz scheinbar aufwendiger, mehrstufiger Vorgangsweise - dennoch durch besonders hohe Fertigungsökonomie ausgezeichnet, da alle Verfahrensschritte problemlos voll automatisierbar sind und sich somit der Personalaufwand minimieren lässt.

Die **Ansprüche** 27 bis 28 betreffen die Verwendung der neuen Bauplatten mit Schrägfaser- und Schräg-Hohlraum-Kernschicht für die verschiedensten Zwecke sowie der Kernschicht alleine.

Anhand der Zeichnung wird die Erfindung näher erläutert:

Es zeigen die Fig. 1 den grundsätzlichen Aufbau der neuen Bauplatte mit Schrägfaser- und Schräg-Hohlraum-Kernschicht, die Fig. 2 eine bevorzugte neue Bauplatte, deren Kernschicht mit aneinanderliegenden positiven und negativen Schrägfaser-Leisten gebildet ist, die Fig. 3 eine Bauplatte mit einer mit zwei Teil-Lagen gebildeten Schrägfaser-Kernschicht, die Fig. 4 eine bevorzugte Art der Herstellung der Schrägfaser-Leisten und deren Anordnung zur Bildung der Schrägfaser-Kernschicht der neuen Bauplatte, die Fig. 5. die detaillierte Herstellung einer Bauplatte in Schritten, die Fig. 6 in Schrägansicht ein mit den neuen Bauplatten beidseitig ausgestattetes Wandungselement, die Fig. 7 eine Schnittansicht durch ein sich in der Herstellungsphase befindliches, vor Ort unter Verwendung der neuen Bauplatten erstelltes Wandstück, die Fig. 8 schematisch die Vorort-Erstellung einer von vornherein mit den neuen schall- und wärmedämmenden Bauplatten gemäß der Erfindung ausgestatteten Betondecke nach dem Prinzip der verlorenen Schalung, die Fig. 9 und 10 zwei Zwischen-Wandelemente auf Basis der neuen Bauplatte, die Fig. 11 ein dreischichtiges, mit den neuen Bauplatten erstelltes Wandungselement im Schnitt, die Fig. 12 in Schrägansicht eine als Schallschluckplatte ausgebildete Bauplatte gemäß der Erfindung, und die Fig. 13 eine gekrümmt geformte Bauplatte.

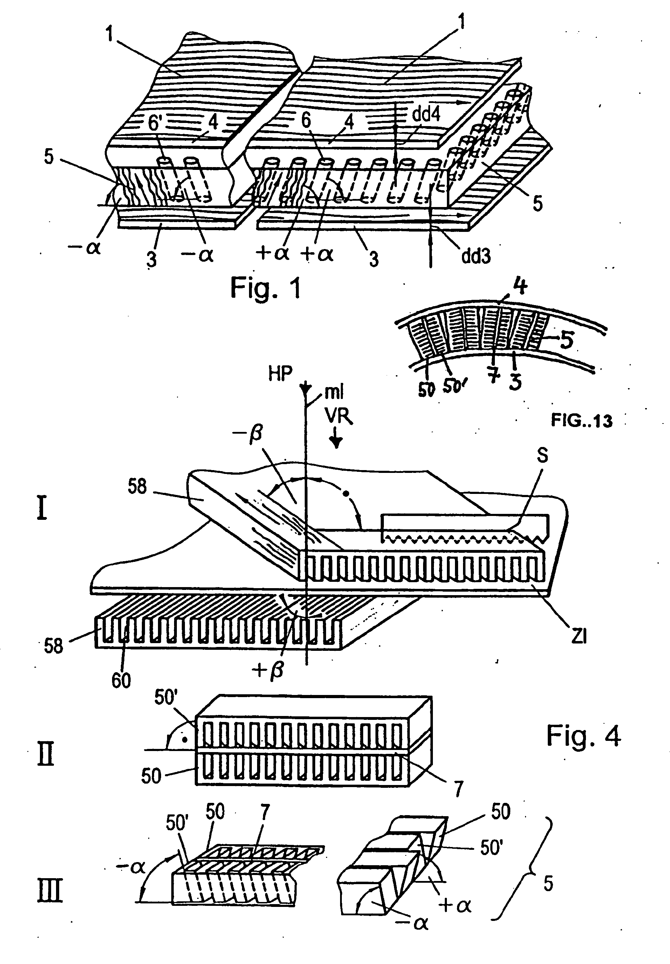

Die in der Fig. 1 im Prinzip gezeigte neue Bauplatte 1 weist eine untere Deckplatte 3 und eine obere Deckplatte 4 auf, zwischen welchen eine Schrägfaser-Kernschicht 5 angeordnet ist, deren positiv schräge Faserung hier in einem positiven Winkel + α, welcher 25 bzw. 30 bis 80°, insbesondere 40 bis 60°, vorzugsweise 40 bis 50°, und im Speziellen etwa 45° beträgt, zur Erstreckung der unteren Deckplatte 3 einnimmt. Beide Deckplatten 3, 4 haben hier die gleiche Faserungsrichtung, wie angedeutet, von rechts nach links und gleiche Plattendicken dd3 und dd4. Es können jedoch durchaus auch dünne Homogen-Platten oder wood plastics-Platten ohne ausgeprägte Faserrichtung als Deckplatten 3, 4 verwendet werden.

Parallel zur schräg positiven - ebenfalls angedeuteten - Faser-Richtung der Schrägfaser-Kernschicht 5 sind in derselben bevorzugtermaßen gleichmäßig verteilt angeordnete und bevorzugterweise untereinander gleich geformte - hier beispielsweise runden Querschnitt aufweisende - positiv-schräge Schräg-Hohlräume 6 angeordnet, welche in gleicher Weise wie die Fasern der Schrägfaser-Kernschicht 5 zur hier unteren Deckplatte 3 einen positiven Winkel + α einnehmen. Die Schichten 3, 4 und 5 sind, z.B. mit hitzeaktivierbarem Leim, flächig aneinander gebunden.

Linksseitig in Fig. 1 ist eine sonst völlig gleichartig aufgebaute Bauplatte 1 mit negativ-schrägen Schrägfasern und negativ-schrägen Schräg-Hohlräumen 6' in der Schrägfaser-Kernschicht 5 angedeutet, wobei die negativen Schrägfasern und die zu denselben parallelen negativen Schräg-Hohlräume 6' hier den gleichen, allerdings nach der anderen Seite gerichteten, also "negativen" spitzen Winkel -α zur Erstreckung der unteren Deckplatte 3 einnehmen. Besonders bevorzugt betragen die Winkel +α und -a, + oder -45°.

Vorteilhaft ist es, wenn die Wände der Schräg-Hohlräume 6, 6' mit einer intumeszierenden Brandschutzmasse besprüht bzw. beschichtet sind.

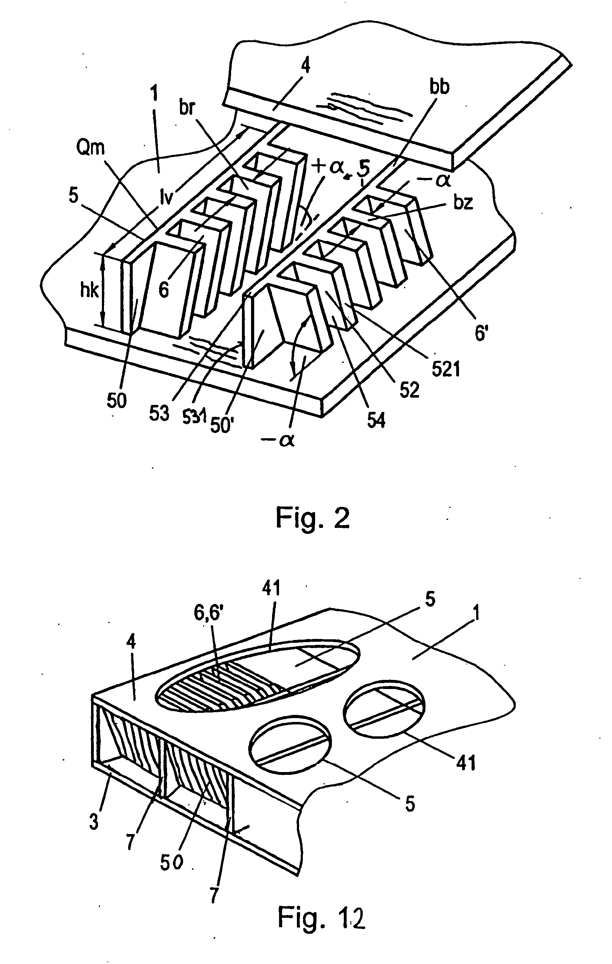

Die Fig. 2 zeigt, bei sonst gleichbleibenden Bezugszeichen-Bedeutungen, eine positive Schrägfaser-Leiste 50, deren positiv-schräge Faserung und positiv-schrägen Schräg-Hohlräume 6 einen positiven spitzen Winkel +α zur unteren Deckplatte 3 einnehmen und rechtsseitig eine negativ-schräge Schrägfaser-Leiste 50', deren negativ-schräge Faserung und negativen Schräg-Hohlräume 6' einen negativen, hier gleich großen, Winkel -α zur unteren Deckplatte 3 einnehmen.

Die positiven und negativen Schrägfaser-Leisten 50, 50' werden beispielsweise jeweils abwechselnd in der in Fig. 2 gezeigten gegenseitigen - allerdings aufgeweitet dargestellten Stellung längs aneinander liegend angeordnet, und miteinander verklebt und bilden letztlich eine Schrägfaser-Kernschicht 5 mit einer Vielzahl von längs aneinander liegenden positiven und negativen Schrägfaser-Leisten 50, 50'. Unter- und oberseitig ist die Schrägfaser-Kernschicht 5 mit den beiden Deckplatten 3, 4 materialschlüssig verbunden, wodurch eine Leichtbauplatte 1 erhalten wird, welche infolge der Schräglage der Stege zwischen den Schräg-Hohlräumen 6. 6' eine ausgezeichnete Verankerung von Befestigungsmitteln, wie Schrauben od. dgl. sicher stellt und gleichzeitig eine hohe Gesamt-Homogenität hinsichtlich Festigkeit aufweist.

Diese Fig. 2 zeigt also schematisch zwei der - in Vielzahl eine Schrägfaser-Schicht 5 bildenden, dann aneinander gebundenen - Schrägfaser-Leisten 50, 50'. Sie weisen in der hier gezeigten Form im Wesentlichen Balken-Grundform mit einer Länge Iv auf. Die Höhe hk der Leisten 50, 50' ist, je nach gewünschter Gesamtdicke der Bauplatte 1, variabel. Die Schrägfaser-Leisten weisen eine etwa kammartige Querschnittsgestalt mit Grund- bzw. Kammbalken 53 und von demselben senkrecht und frei endend wegragenden, hier untereinander gleich geformten schrägen Zahnfortsätzen 52 mit Endflächen 521 auf. Zwischen den Zahnfortsätzen 52 sind hier ebenfalls untereinander gleich geformte - Einschnitte bzw. Zahn-Zwischenräume 54 bzw. 6, 6' angeordnet, die letztlich die positiven und negativen Schräg-Hohlräume 6, 6' in der Schrägfaser-Kernschicht 5 bilden. Der Kammbalken 53 hat eine Breite bb, die Zahnfortsätze 52 haben die Breite bz und die Zahn-Zwischenräume 54, 6, 6' zwischen denselben die Breite br. Günstigenfalls können die soeben genannten Breiten bb, bz und br untereinander gleich sein. Die Gesamt-Querschnittsfläche der Holzmasse der Schrägfaser-Leisten 50, 50' ist mit Qm bezeichnet.

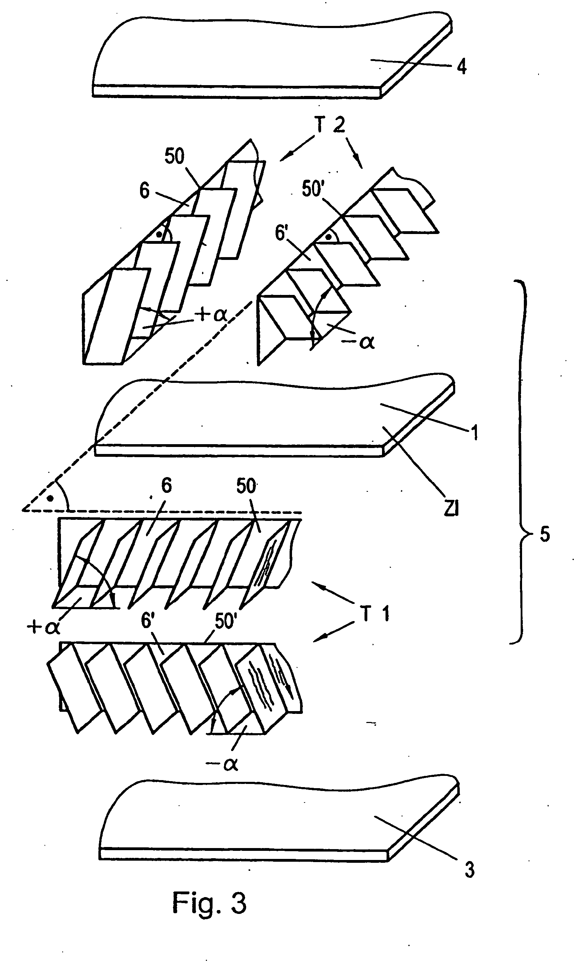

Besonders hohe Festigkeit weisen erfindungsgemäße Bauplatten 1 mit zwei Teil-Lagen T1 und T2 umfassenden Schrägfaser-Kernschichten 5 mit Deckschichten 3, 4 auf, wie sie schematisch und aufgeweitet in der Fig. 3 - bei sonst gleichbleibenden Bezugszeichenbedeutungen - gezeigt sind. Die untere Teil-Lage T1 ist hier mit eins zu eins abwechselnd negativen und positiven Schrägfaser-Schräghohlraum-Leisten 50, 50' gebildet, welche etwa parallel zum Betrachter angeordnet sind. An diese erste Teil-Lage T1 ist hier eine Zwischenlage ZI aus Holz gebunden und an dieselbe eine gleich gebaute, obere zweite Teil-Lage T2, deren Schrägfaser-Schräghohlraum-Leisten 50, 50' der ersten Teil-Lage T1 in allerdings mit zu den positiven und negativen Schrägfaser-Leisten 50, 50' senkrechter Ausrichtung, also zum Betrachter hin gerichtet sind. Bei dieser 90° verdrehten Anordnung der Teillagen T1, T2 zueinander ist eine besonders hohe Festigkeit, Stabilität und Gesamt-Homogenität der neuen Bauplatte 1 erreichbar.

Es soll hier betont werden, dass die zweite Teil-Lage T2 je nach beabsichtigtem Einsatz auch in jedem anderen als rechten Winkel zur ersten Lage T1, also für spezielle Zwecke auch z. B. parallel zur ersten Teil-Lage T1 angeordnet sein kann. Die Anordnung der Zwischenlage ZI ist keinesfalls zwingend.

Die Fig. 4 erläutert eine bevorzugte Ausführungsform der Herstellung der Kernschicht 5 der neuen Bauplatten. Es ist dort nicht näher gezeigt, dass zuerst in Bretter 58 in Brett-Längsrichtung, und somit in Faserrichtung, faserparallele Nuten 60 eingefräst werden.

Gezeigt ist, wie jeweils in einem Winkel +β und -β, bevorzugterweise +45° und - 45°, zur Mittellinie ml, welche gleichzeitig die Verarbeitungsrichtung VR bzw. kontinuierliche Fortbewegungsrichtung der jeweils schräg angeordneten Bretter 58 ist. Es ist gezeigt, wie durch eine nicht gezeigte Heißpresse HP, zwei übereinander angeordnete Bretter 58 mit Nuten 60 zueinander gekreuzt in Verarbeitungsrichtung VR eingezogen werden. Jeweils an die Bretter 58 seitlich direkt anschließend werden jeweils übereinander und zueinander in gleicher Weise gekreuzt laufend weitere genutete Bretter 58 kontinuierlich eingezogen.

Bei der in Fig. 4 gezeigten Verfahrensweise werden zwischen den übereinander angeordnet zugeführten Schichten von genuteten, zueinander gekreuzt eingezogenen Brettern 58 laufend dünne Zwischenlage-Schichtbretter ZI, z.B. aus Homogenholz, eingezogen, außerdem sind hier die Bretter 58 mit ihren Nutöffnungen einander zugekehrt angeordnet. Es soll gleich hier betont werden, dass das Einziehen der Zwischenlage ZI keinesfalls zwingend ist, wobei es ohne Zwischenschicht günstig ist, wenn die Nuten 60 der Bretter 58 in den beiden Schichten jeweils nur nach einer gleichen Seite hin ausgerichtet sind.

Es ist an dieser Stelle besonders zu betonen, dass die genuteten Bretter 58 auch in jeder anderen Lage ihrer Nutöffnungen eingesetzt werden können, also z. B. mit in gleicher Richtung offenen Nuten 60. Weiters können die Zwischenlagen ZI beliebig eingesetzt und angeordnet werden und es können innerhalb eines weiten Bereiches die Winkel +β und -β zur Mittellinie ml bzw. zur Produktionsverlaufs-Richtung VR variiert werden, wobei es besonders bevorzugt ist, wenn diese Winkel +β und -β in einem Bereich zwischen 40 und 50° liegen, also Faser- und Nut-Erstreckung der jeweils beiden gekreuzt in die Heißpresse einlaufenden Bretter 58 im Wesentlichen zueinander senkrecht angeordnet sind.

Laufend werden nach Durchlaufen der für die Bindung der beiden Bretter-Schichten vorgesehenen Heißpresse HP - in der Fig. 4 an den Beginn gestellt gezeigt - mit Schnitten S, symbolisiert durch ein Sägesymbol, senkrecht zur Verarbeitungs- und Fortbewegungs-Richtung VR bzw. zur Mittellinie ml in jeweils gewünschter Stärke bzw. Dicke der späteren Kernschicht 5 (Doppel-)Schrägfaser-Leisten 50, 50' abgetrennt, siehe Phase II.

Hier ist gut ersichtlich, wie aus den Zwischenlage-Brettern ZI der Phase I die Armierungs- bzw. Versteifungsleiste 7 gebildet worden ist.

Zur Phase III hin wird die (Doppel-)Schrägfaser-Leiste 50, 50' um 90° hier - siehe Pfeil - nach vorne gedreht und an dieselbe werden Seit an Seit, und längsseitig und breitseitig weitere (Doppel-) Schrägfaser-Leisten 50, 50' angeordnet und mittels Leim od. dgl. aneinander gebunden.

Die letztlich in zwei Dimensionen aneinander gebundenen (Doppel-)Schrägfaser-Leisten 50, 50' bilden insgesamt die Schrägfaser-Kernschicht 5, an welche dann unter- und oberseitig jeweils - die hier nicht gezeigten - Deckschichten 3, 4 gebunden bzw. heißverleimt werden.

Die Einbringung einer Brandschutzmassen-Schicht in die Nuten 60 der Bretter 58 erfolgt günstigerweise gleich nach dem Nuten-Fräswerkzeug bei der Erstellung der längsgenuteten Bretter 58.

In gleicher Weise erfolgt der Leim-Auftrag auf die Bretter 58, auf die Zwischenlage ZI und später auf die Deckschichten 3, 4 an jeweils hiefür günstigen Punkten des neuen kontinuierlichen Fertigungsprozesses. Die Härtung oder Aktivierung und Härtung des Klebemittels erfolgt günstigerweise durch Einblasen von heißer Luft in die Nuten 60 bzw. in die aus denselben gebildeten Schräg-Hohlräume 6, 6'.

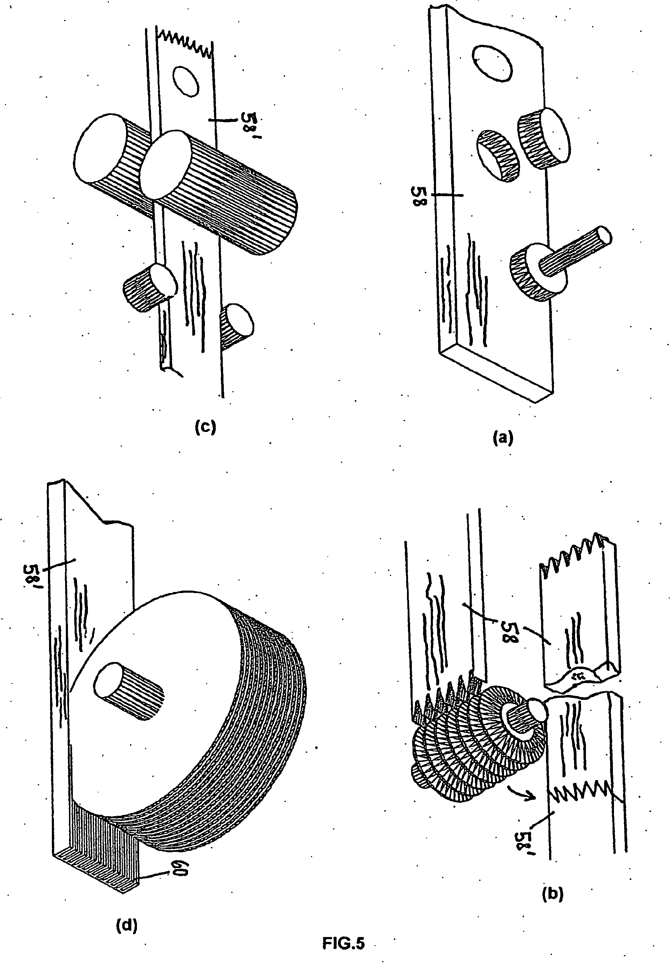

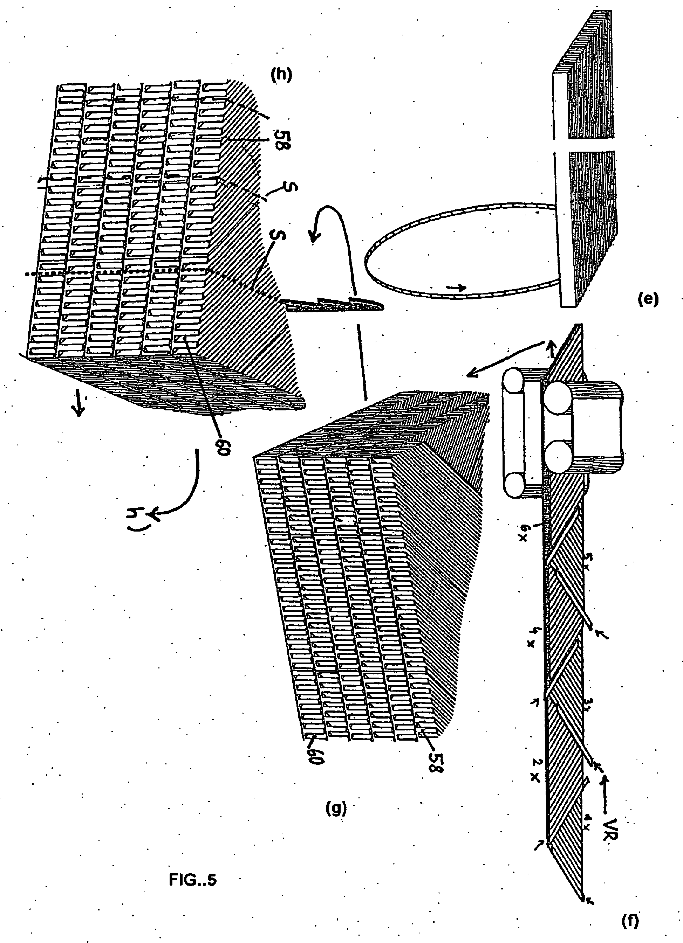

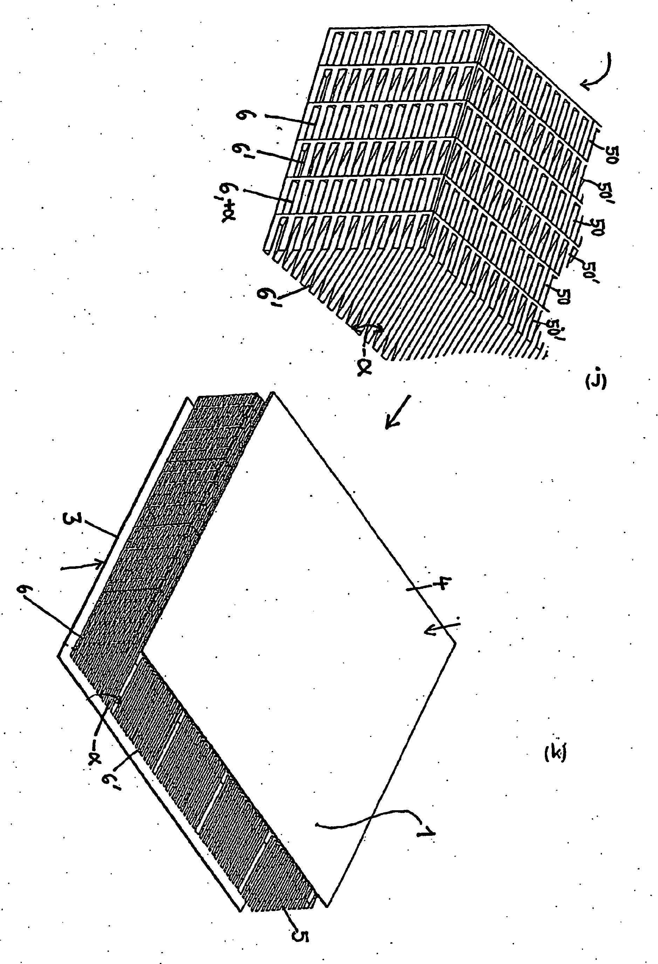

Anhand der Fig. 5 wird eine bevorzugte rationelle Herstellung einer Bauplatte, beginnend vom Brett 58 bis zur fertigen Bauplatte 1 in Schritten a bis k beispielhaft näher erläutert:
- Schritt a:: Entasten der Bretter 58 und Ausflicken vorhandenen Astlöcher im Durchlauf
- Schritt b:: Zinken der Bretter 58 für die Bildung von Brettern gewünschter Länge mittels Zinkenfräse und zusammenfügen zu einem "Endlos"-Brett
- Schritt c:: Hobeln der vier Flächen der "Endlos"-Bretter 58 mittels Oberseiten und Seitenflanken-Hobelmaschine
- Schritt d:: Fräsen der zueinander parallelen - hier rechteckigen - Nuten 60 in die "Endlos"-Bretter 58 in Längsrichtung und parallel zur Holzfaserung
- Schritt e:: 45° schräges Schneiden und Abkappen der Enden der genuteten Bretter 58 mittels Kreissäge od. dgl.
- Schritt f:: Bilden einer Sechsfach-Matte durch in Arbeitsbewegungsrichtung VR erfolgendes Nacheinander-Auflegen von Schichten der genannten hintereinander aneinander liegenden Bretter 58 in hintereinander abwechselnden Winkeln von + 45° und - 45° zur Arbeitsbewegungsrichtung VR und - nicht näher gezeigt - Verleimung der Schichten miteinander mittels Durchlauf-Heißpresse
- Zustand g:: in Schritt f gebildete Sechsfach-Matte aus sechs Schichten der zueinander abwechselnd um 90° gekreuzten Bretter 58 mit ebenso gekreuzt angeordneten Nuten 60.
- Schritt h:: Führung von Schritten S mittels Säge parallel zur Frontfläche der Sechsfach-Matte in Abständen voneinander, welche der jeweils gewünschten Dicke der zu fertigenden Bauplatte entsprechen
- Schritt und:
- Zustand j:: Umkippen der im Schritt h gebildeten Sechsfach-Schrägfaserleiste 50, 50' um 90° nach vorne bzw. nach rechts und nicht gezeigtes seitliches Aneinanderleimen der Sechsfach-Schrägfaserleisten 50, 50', 50, 50', 50, 50' zur Kernschicht 5
- Schritt k:: Anleimen der oberen und der unteren Deckschicht 3 und 4 an die mit den Sechsfach-Leisten 50, 50' gebildete Schrägfaser-Kernschicht 5 unter Bildung der Bauplatte 1.

Danach erfolgt, wenn erwünscht, das Belegen der Seitenflanken mit Flanken-Schichten, z.B. aus Holz.

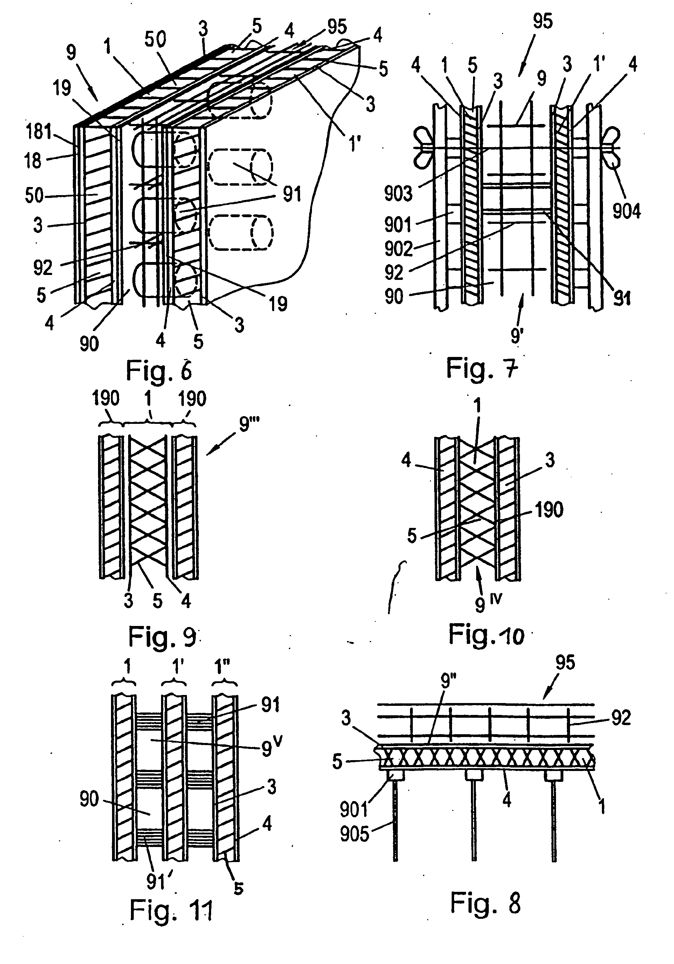

Die Fig. 6 zeigt - bei sonst gleichbleibenden Bezugszeichenbedeutungen - in Schrägansicht die Bildung eines Wandelementes 9 mit zwei dasselbe begrenzenden und als Verkleidungs-, beispielsweise als Wärmedämmplatten fungierenden, wie bisher beschriebenen neuen Bauplatten 1 und 1'.

Die beiden Bauplatten 1, 1' werden im Abstand zueinander lagestabilisiert angeordnet , wobei der Zwischenraum 90 zwischen denselben von gleichmäßig verteilt angeordneten, denselben überbrückenden und im Wesentlichen innenseitig an die hier zuerst einmal als Schalungsplatten fungierenden Bauplatten 1, 1' anliegenden und gebundenen Distanzhalteelementen 91, welche hier mit Rohrstücken, z.B. aus Kunststoff, gebildet sind, durchmessen ist. In den Zwischenraum 90 werden Armierungsstäbe 92 eingebracht.

Innenseitig können die Bauplatten 1, 1' mit einer nässe-abweisenden, bevorzugter Weise dampfdurchlässigen Haftvermittlungsschicht 19, z.B. auf Basis von Epoxiharz mit einer Besandung, versehen sein.

In den Zwischenraum 90 zwischen den beiden Bauplatten 1 und 1' wird dann z.B. Leichtbeton 95 eingebracht, wobei es zur Umgießung der in ihrem Inneren freibleibenden Distanzhalte-Rohrstücke 91 und zur Bindung des Betons 95 an die hier sozusagen eine "verlorene Schalung" bildenden Bauplatten 1, 1' kommt.

Nach dem Erhärten des Betons 95 wird ein beiderseitig mit fertigen Wärme- und Schallschutz-Verkleidungsplatten 1, 1' versehenes stabiles Wandstück bzw. ein derartiges Fertig-Wandungselement 9 erhalten. Außenseitig können die Platten 1, 1' noch mit einem Putzträger 181, z.B. mit einem Putznetz, bzw. gleich mit einem fertigen Putz 18 versehen sein. Besonders bevorzugt ist der Einsatz einer dünnen offenen Schrägfaser-Schräghohlraum-Kernschicht als Putzträger 181.

Die Ausbildung der Distanzhalteelemente 91 als innen leere Rohrstücke hat den Vorteil, dass auch dort Dampfdiffusion quer durch die Wand 9 stattfinden kann. Selbstverständlich kann auch jede andere Art von Distanzelement 91 Einsatz finden.

Die Fig. 7 zeigt - bei sonst gleichbleibenden Bezugszeichenbedeutungen - schematisch die reale Vorgangsweise bei Vorort-Erstellung einer bzw. eines dem in Fig. 6 gezeigten Wandungselement entsprechenden Wandung bzw. Wandstücks 9'. Es ist dort gezeigt, wie die beiden - zuerst als Schalungsplatten dienenden und letztlich die Verkleidung des Wandstücks bildenden - Bauplatten 1, 1' außenseitig gegen Verformung, insbesondere Ausbauchung, mittels Haltebalken 901 und 902 od. dgl. und durchgehender Schraubschäfte 903 mit Flügelmuttem 904 in Position gehalten sind, bevor die Verfüllung des die Armierungseisen 92 beherbergenden Zwischenraums 90 zwischen den Platten 1 und 1' mit dem Beton 95 od. dgl. erfolgt.

Die Fig. 8 zeigt - bei sonst gleichbleibenden Bezugszeichenbedeutungen - schematisch die Herstellung einer Decke 9", indem auf eine mit Bauplatten 1 gemäß der Erfindung gebildete, mittels Schraubstützen 905 und Haltebalken 901 abgestützte, - wiederum "verlorene Schalung" - nach Verlegung der Armierungseisen 92 die Decke 9" mit Beton 95 gegossen wird. Nach Verfestigung desselben wird die Stützkonstruktion 901, 905 entfernt, und es wird eine fertige, beispielsweise mit einer Schalldämm- bzw. Akustik-Verkleidung am Plafond versehene Beton-Decke 9" erhalten.

Die Fig. 9 zeigt - bei sonst gleichbleibenden Bezugszeichenbedeutungen - ein weiteres Wandungselement 9"', welches mit einer Bauplatte 1 und beidseitig an dieselbe gebundenen handelsüblichen Gipskartonplatten 190 gebildet ist. Die rechte Gipskartonplatte trägt eine dünne Schrägfaser-Schräghohlraum-Kernschicht 5 gemäß der Erfindung als Putzträger.

Anstelle der Gipskartonplatten 190 können hoch-feuerfeste Brandschutz-Mineralfaserplatten aufgebracht sein, und auf diese Weise kann eine Wandung mit F90-Brandhemmwirkung erstellt werden, insbesondere dann, wenn die Hohlräume 6 der Kernschicht 5 mit einer intumeszierenden Brandschutzmasse beschichtet sind.

Bei einer noch einfacher gebauten, direkt als solches z.B. als Zwischenwandelement 9^{IV} einsetzbare, in der Fig. 10 - bei sonst gleichbleibenden Bezugszeichenbedeutungen - gezeigten Bauplatte 1 sind die beiden Deckschichten 3, 4 auf der Schrägfaser-Schräghohlraum-Kernschicht 5 gleich selbst mit den Gipskartonplatten 190 od. dgl. gebildet.

Die Fig. 11 zeigt - bei sonst gleichbleibenden Bezugszeichenbedeutungen - ein mit drei zueinander parallel im Abstand voneinander angeordneten Bauplatten 1, 1', 1" gebildetes Wandelement 9^{V}, bei welchem in den beiden Zwischenräumen 90 zwischen jeweils zwei der Platten 1, 1', 1" Distanzhalteelemente 91, beispielsweise aus mehreren aneinander gebundenen, wie prinzipiell in den Fig. 1 und 2 gezeigten, entsprechend einfach gestalteten Schrägfaser-Schichtkörpern 5, angeordnet sind.

Die Fig. 12 zeigt - bei sonst gleichbleibenden Bezugszeichenbedeutungen - eine als Akustik- bzw. Schallschluck-Verkleidungsplatte für akustik-neutrale Räume ausgebildete Bauplatte 1, welche sich von der z.B. in der Fig. 5j gezeigten Bauplatte 1 vor allem dadurch unterscheidet, dass in die dem Schallerreger zugekehrte Deckschicht 4 dieselbe durchsetzende, hier ovale Schallschluck-Öffnungen 41 eingearbeitet sind, welche den Zugang des Schalls an die in Folge der Öffnungen 41 sichtbare Schrägfaser-Schicht 5 mit den - hier als die Schallenergie durch Vielfach-Reflexion vernichtende Schallschluck-Hohlräume fungierenden - Schräg-Hohlräumen 6, 6' freigibt.

Es soll zu den Fig. 6 - 12 nur kurz erläutert sein, dass die dort eingesetzten Bauplatten 1 alle zumindest eine durch schräge Striche symbolisierte Schrägfaser-Kernschicht 5, vorzugsweise eine solche aus Schrägfaser-Einfach- oder Mehrfach-Leisten 50, 50' aufweisen, wie auch immer diese Schrägfaser-Kernschicht 5 im einzelnen aufgebaut ist.

Die Fig. 13 zeigt - bei sonst gleichbleibenden Bezugszeichenbedeutungen - im Schnitt, wie einer - hier übertrieben gekrümmte Bauplatte 1 zwischen einer unteren, konkaven 3 und einer oberen, konvexen Deckschicht 4 Schrägfaser-Schräghohlraum-Doppelleisten 50, 50' mit Armierungsleisten 7 jeweils unten mit ihren Längskanten aneinander stoßend und von dort dann zur oberen Deckschicht 4 hin in kleinem spitzen Winkel auseinanderstrebend angeordnet sind.

Es soll an dieser Stelle deutlich darauf hingewiesen werden, dass die bei der Nutherstellung der Bretter anfallenden Holzstäube als wertvolles Material für die Erzeugung von Füllstoffen in der Kunststoffindustrie, für wood plastics, für die Gewinnung von Holzgas und der verschiedensten Derivate, für die Melamin- und Alkohol-Produktion, für Treibstoffe u. dgl. eingesetzt werden können.

## Patentansprüche

1. Bauplatte mit Mehrschichtaufbau, welche mit zwei voneinander beabstandet und zueinander parallel angeordneten Deckschichten und mindestens einer zwischen denselben angeordneten und mit ihnen verbundenen Kernschicht aus Holz mit einer Mehrzahl von in derselben angeordneten Hohlräumen, gebildet ist,
wobei
zwischen den zwei, jeweils mit einem flächigen Schicht-, Platten- oder FolienMaterial aus der Gruppe Holz und Holzwerkstoffe, Schichtholz, Sperrholz, Holzspanmaterial, kunststoffgebundenes Holz, Metalle, Textil- und Fasermaterialien, Pappen, Papiere, Kunststoffe, faserverstärkte Kunststoffe, mineralbasierte Baustoffe, Stein, Kunststein sowie Verbundstoffe von zwei oder mehr der soeben genannten Materialien, gebildeten, zumindest einlagigen, Deckschichten (3, 4)
als Kernschicht zumindest eine an die genannten Deckschichten (3, 4) gebundene, zumindest einlagige Schrägfaser-Kern-Schicht (5) angeordnet ist, welche, aus einem einheitliche Faserung aufweisenden Holz gebildet ist,
**dadurch gekennzeichnet, dass** die Hohlräume zu den genannten Deckschichten einen spitzen Winkel aufweisen und dass die Fasern der Schrägfaser-Kernschicht (5) zur Fläche der beiden Deckschichten (3, 4) einen positiven Winkel (+α) von +25 bis +80° und/oder einen negativen Winkel (-α) von -25 bis -80°, aufweisen,
wobei weiters die in Vielzahl die Schrägfaser-Kernschicht (5) voll durchsetzenden, positiv-schrägen und/oder negativ-schrägen Schräg-Hohlräume (6, 6') zur jeweiligen schrägen Faserrichtung parallel, verlaufen.

2. Bauplatte nach Anspruch 1,
**dadurch gekennzeichnet,**
**dass** zwischen den zwei Deckschichten (3, 4) als Kernschicht zumindest eine an dieselben gebundene, zumindest einlagige Schrägfaser-Kern-Schicht (5) angeordnet ist, welche aus einem einheitliche Faserung aufweisenden Holz gebildet ist, dessen Fasern zur Fläche der beiden Deckflächen (3, 4) einen Winkel (+α) von +30 bis+80°, vorzugsweise von +40 bis +60°, und/oder einen Winkel (-α) von -30 bis -80°, vorzugsweise von -40 bis -60°, aufweisen.

3. Bauplatte nach Anspruch 1 oder 2,
**dadurch gekennzeichnet,**
**dass** die Kernschicht (5) mit längsseitig aneinander liegenden und gebundenen Schrägfaser-Leisten (50, 50') aus jeweils pro Leiste (50, 50') einheitliche, zur Leistenerstreckung und zu den Flächen der Deckschichten (3, 4) positiv-schräge oder negativ-schräge Schräg-Faserung aufweisendern Holz gebildet *ist,* wobei die Schrägfaser-Leisten (50, 50') jeweils eins zu eins abwechselnd oder aber In Serien von mehr als einer positiv-schrägen oder negativ-schrägen, Schrägfaser-Leiste (50 oder 50') abwechselnd
- einmal (50) oder mehrmals einheitliche positiv-schräge Schrägfaser-Ausrichtung und eine Vielzahl von zu den positiv-schrägen Schrägfasern parallelen, positiv-schrägen Schräg-Hohlräumen (6), -Ausnehmungen, -Fräsungen oder -Bohrungen aufweisen, und
- einmal (50') oder mehrmals einheitliche negativ-schräge Schrägfaser-Ausrichtung und eine Vielzahl von zueinander und zu den negativ-schrägen Schrägfasern parallelen, negativ-schrägen Schräg-Hohlräumen (6') aufweisen.

4. Bauplatte nach Anspruch 3,
**dadurch gekennzeichnet, dass** die Schrägfaser-Leisten (50, 50') der Kernschicht (5) aus untereinander gleichen Hölzern gebildet sind.

5. Bauplatte nach einem der Ansprüche 3 oder 4,
**dadurch gekennzeichnet,**
- **dass** die Kernschicht (5) mit zwei flächig aneinander liegenden Schrägfaser-Teillagen (T1, T2) gebildet ist, deren jede mit der von den einander eins zu eins oder jeweils in Reihen von mehr als einer Leiste (50, 50') abwechselnden positiv-schrägen und negativ-schrägen Schrägfaser-Leisten (50, 50') gebildeten Schrägfaser-Kernschicht (5) gebildet ist,
wobei eine der Teillagen (T1, T2) bzw. die Richtung von deren Schrägfaser-Leisten (50, 50') in einem Winkel (β) von 30° bis 120°, vorzugsweise in einem Winkel von 90°, zur anderen Teillage (T2, T1) bzw. zur Richtung von deren Schrägfaser-Leisten (50', 50) angeordnet ist, oder
- **dass** die positiven und negativen Schrägfaser-Leisten der Teillagen (T1, T2) zu einander parallel ausgebildet sind, oder,
- **dass** die Kernschicht (5) zwischen den Deckschichten (3, 4) mit drei Schrägfaser-Teillagen (T1, T2, T3) gebildet ist, deren jede der Kernschicht (5) gemäß Anspruch 2 entsprechend ausgebildet ist, wobei
- entweder die erste und die dritte Teillage (T1) und (T3) zueinander parallel schräg ausgerichtete Schrägfaser-Leisten (50, 50') aufweisen und die zwischen denselben (T1. T3) angeordnete zweite Teillage (T2) mit Schrägfaser-Leisten (50, 50') in einem Winkel im Bereich von 30 bis 120°, gegebenenfalls von 30 bis 60°, vorzugsweise von 90°, zu den Schrägfaser-Leisten (50, 50') der beiden anderen Teillagen (T1, T3) angeordnet ist,
- oder die zweite Teillage (T2) gegenüber der ersten Teillage (T1) um 120° verdreht und die dritte Teillage (T3) gegenüber der zweiten Teillage (T2) um weitere 120° verdreht angeordnet ist,
- wobei zwischen den Teillagen (T1, T2) oder (T1, T2, T3) Jeweils keine oder eine dünne Zwischenlage aus Holz oder Holz-Werkstoff angeordnet und mit den Teillagen (T1, T2 oder T1, T2, T3) verbunden Ist.

6. Bauplatte nach einem der Ansprüche 3 oder 4,
**dadurch gekennzeichnet,**
**dass** die Kernschicht (5) mit einer, vorzugsweise geraden, Anzahl von Schrägfaser-Teillagen (T1, T2,...) gebildet Ist, deren jede mit positiv-schrägen und/oder negativ-schrägen Schrägfaser-Leisten (50, 50') gebildet ist,
- wobei alle positiv-schrägen Schrägfaser-Leisten (50) der ersten Teillage (T1) die gleiche positiv-schräge Schrägfaser-Ausrichtung und eine Vielzahl von schrägfaser-parallelen, positiv-schrägen Schräg-Hohlräumen (6), aufweisen,
und
- wobei alle negativ-schrägen Schrägfaser-Leisten (50') der zweiten Teillage (T2) die gleiche negativ-schräge Schrägfaser-Ausrichtung und eine Vielzahl von schrägfaserparallelen, negativen Schräg-Hohlräumen (6'), aufweisen.

7. Bauplatte nach einem der Ansprüche 1 bis 6,
**dadurch gekennzeichnet,**
**dass** die Schräg-Hohlräume (6, 6') in der Kernschicht (5) oder in einer Teillage (T1, T2, T3...) derselben untereinander gleiche Flächengröße und/oder geometrische Gestalt besitzende Hohlraum-Querschnitte aufweise, und/oder In Längserstreckungsrichtung der Schrägfaser-Leisten (50, 50') voneinander gleich beabstandet sind, und
- **dass** das Verhältnis der Gesamtheit der Querschnittsflächen der Schräg-Hohlräume (6, 6') in der Kernschicht (5) oder in deren Teillagen (T1, T2, T3...) zur Gesamtheit der Querschnittsfläche(n) (Qm) des dieselbe(n) bildenden Holzes, zwischen 5:1 und 1:5, beträgt.

8. Bauplatte nach einem der Ansprüche 1 bis 7,
**dadurch gekennzeichnet,**
- **dass** die Innenwände und der Grund der Schräg-Hohlräume (6, 6') der Kernschicht (5) oder von deren Teillagen (T1, T2, T3...) mit einer bei Hitzeeinwirkung im Brandfall expandierenden und die Schräg-Hohlräume (6, 6') füllenden, intumeszierenden Brandschutz- oder Brandausbreitungshemm-Polymermasse auf Basis von Struktur-Wasser enthaltenden Silikaten beschichtet sind, und/oder
- **dass** die Schräg-Hohlräume (6, 6') mit einer Kunstharz-Leicht-Schaummasse auf Basis von Polyurethan oder Polyacryl gefüllt sind.

9. Bauplatte nach einem der Ansprüche 1 bis 8,
**dadurch gekennzeichnet,**
**dass** die Kernschicht (5) oder deren Teillagen (T1, T2, T3) mit Schrägfaser-Leisten (50, 50') mit kammartiger Querschnittsgestalt mit zu den Deckflächen (3, 4) senkrecht angeordnetem Kammbalken (53) und von demselben im rechten Winkel, wegragenden, jedoch positiv-schräg oder negativ-schräg zu den Deckschichten (3, 4) verlaufenden Zahnfortsätzen (52) gebildet ist, wobei die Zahn-Zwischenräume (54) zwischen denselben die Schräg-Hohlräume (6, 6') der Kernschicht (5) bilden, und
- **dass** die Zahn-Zwischenräume (54) der Schrägfaser-Leisten (50, 50') als zueinander parallele, durch Fräsung gebildete, untereinander gleiche Tiefe und/oder Querschnittsfläche und/oder Querschnittsgestalt aufweisende Nuten, Rinnen, Spalte oder Schlitze ausgebildet sind und/oder
- **dass** die Zahn-Zwischenräume (54) der Kernschicht (5) längliche Parallelogramm- oder Rechteck-Querschnittsform, gegebenenfalls mit gerundetem Grund, aufweisen, wobei die Rechteck-Länge im Verhältnis zur Rechteck-Breite (10:1) bis (1:1) und gegebenenfalls (5:2) bis (4:3), beträgt, und/oder
- **dass** - die Breite (br) der Zahn-Zwischenräume (54) die Hälfte bis das Doppelte der Breite (bz, bb) der Zahnfortsätze (52) und/oder des Kammbalkens (53) beträgt oder die genannten Breiten (br, bb, bz) untereinander gleich sind.

10. Bauplatte nach einem der Ansprüche 1 bis 9,
**dadurch gekennzeichnet,**
- **dass** die Kernschicht (5) mit linear-gerade direkt aneinandergereiht angeordneten, untereinander gleich breiten, positiv-schrägen und negativ-schrägen Schrägfaser-Leisten (50, 50') gebildet ist,
- welche entweder direkt längs aneinanderliegend angeordnet sind,
- wobei in diesem Fall die Deckschichten (3, 4) aus, gegebenenfalls dünnen, kompakten Holzspanplatten, Holzhomogenplatten oder Platten aus kunststoffgebundenen Holz; ohne ausgeprägte Faserungsrichtung gabildet sind, *oder*
- **dass** jeweils zwischen einander benachbarten Schrägfaser-Leisten (50, 50') an deren einander zugewandten vertikalen Längsflanken anliegende, an dieselben gebundene, zueinander parallel verlaufende Armierungs-Leisten (7) aus Holz, Metall oder Kunststoff angeordnet sind,
- wobei die Deckschichten (3, 4) aus Holz gebildet sind, dessen Fasern senkrecht zur Längserstreckungsrichtung der Armierungsleisten (7) und der sich ebenso erstreckenden Fasern derselben ausgerichtet sind,

11. Bauplatte nach Anspruch 10,
**dadurch gekennzeichnet,**
**dass** die Armlerungsleisten (7) länglich rechteckigen Querschnitt aufweisen und - mit ihren ober- und unterseitigen Schmalseitenflächen materialschlüssig an die Deckschichten (3, 4) gebunden sind.

12. Bauplatte nach einem der Ansprüche 10 oder 11,
**dadurch gekennzeichnet,**
**dass** die Armierungsleisten (7) für den Fall, dass die Deckschichten (3, 4) mit zueinander paralleler Ausrichtung der Fasern des sie bildenden Holzes, ausgebildet sind, in der Kernschicht (5) In ihrer Längserstreckungsrichtung so angeordnet sind, dass die Längserstreckung der Armierungsleisten (7) und der Fasern des sie bildenden Holzes, senkrecht zur Ausrichtung der Fasern der Deckschichten (3, 4) verlaufen.

13. Bauplatte nach einem der Ansprüche 1 bis 12,
**dadurch gekennzeichnet,**
**dass** die Kernschicht (5) aus einem üblichen Holz aus der Gruppe Eiche, Fichte, Kiefer, Pappel und Weide, mit einem derartigen Holz minderer Qualität oder aus einem Leichtholz aus der Gruppe Balsa-, Okurne-, Abachi- und Wawa-Holz mit einer Dichte im Bereich von 0,1 bis 0,8 g/cm³, gebildet ist und/oder
- **dass** die Deckschichten (3, 4) mit untereinander gleichen Hölzern und/oder mit untereinander gleichen Materialstärken gebildet sind, oder
- **dass** die Deckschichten (3, 4) mit voneinander verschiedenen Arten von Holz und/oder mit voneinander verschiedenen Materialstärken, jedoch mit untereinander gleichem physikalischem und richtungsabhängig gleichem Veränderungsverhalten bei Änderung der Umgebungsbedingungen gebildet sind, und
- **dass** die Bauplatte zumindest an zwei jeweils einander gegenüberliegend verlaufenden, vorzugsweise an allen, Schmalseiten-Flanken mit an diese gebundenen Deckleisten (2), vorzugsweise aus Holz, abgeschlossen ist.

14. Bauplatte nach einem der Ansprüche 3 bis 13,
**dadurch gekennzeichnet,**
**dass** zwischen einer konkav gekrümmten unteren Deckschicht (3) und einer ebenso gekrümmten oberen Deckschicht (4) mit den unteren Längs-Kanten der sie bildenden Schrägfaser-Leisten (50, 50') aneinander liegende und nach oben hin eine Schrägfaser-Kernschicht (5) mit der Krümmung der Deckschichten (3, 4) entsprechend auseinanderstrebenden jeweils abwechselnd einzelnen positiven und negativen Schrägfaser-Leisten (50, 50') oder aber mit Doppel-Schrägfaser-Leisten angeordnet ist.

15. Bauplatte nach einem der Ansprüche 1 bis 14,
**dadurch gekennzeichnet,**
- **dass** sie als Schallschluck- bzw. Akustikplatte ausgebildet ist, und zur Schallquelle hin eine Deckschicht (4) mit dieselbe durchsetzenden Schalldurchlass-Öffnungen (41) ausgebildet ist und die Kernschicht (5) durch diese Öffnungen (41) hindurch direkt schall-zugänglich ist, wobei die Innenwände der Schräg-Hohlräume mit einer bei Hitzeeinwirkung im Brandfall intumeszierenden Brandschutz-Polymermasse beschichtet sind, oder
- **dass** die Bauplatte (1) als Schwingungs- und Resonanzplatte für Böden, Wände und Decken von Schallgenerier- und -abstrahl-Geräten, Lautsprecherboxen oder Musikinstrumenten ausgebildet ist, wobei gegebenenfalls eine ihrer Deckschichten (3, 4) mit den dieselbe durchsetzenden Schall-Abstrahlöffnungen ausgebildet ist und die Kernschicht (5) durch diese Öffnungen hindurch schallabstrahl-wirksam ist, oder
- **dass** die Bauplatte als Sicherheits-Bauplatte, oder Türblatt mit zwei Deckschichten (3, 4) aus Holz oder einem Holz-Werkstoff und Armierungsleisten (7) ausgebildet ist, wobei die vorhandenen, in der, mit brandhemmendem Intumeszenzmaterial beschichtete oder mit Leichtschaumstoff gefültte Schräg-Hohlräume (6, 6') aufweisenden, Kernschicht (5) voneinander beabstandet und zueinander parallel angeordneten Armierungsleisten (7) aus Stahl oder Aluminium bestehen, und/oder
- **dass** an zumindest eine der Deckschichten (3, 4) aus Holz außenseitig eine Metallplatte oder -folie klebe-gebunden ist, oder
- **dass** an Stelle von Deckschichten (3, 4) aus Holz jeweils eine Metallplatte oder -folie direkt an die Kernschicht (5) gebunden ist, wobei die Bindung der Metallplatte oder - folie mit einem bei Hitzeeinwirkung im Brandfall intumeszierenden Kleber erfolgt ist.

16. Wand- oder Deckenelement, **dadurch gekennzeichnet,**
- **dass** es mit zumindest zwei mittels Distanzhaltekörpern (91) aus Holz voneinander beabstandet und zueinander parallel angeordneten und über dieselben miteinander verbundenen Bauplatten (1, 1') nach einem der Ansprüche 1 bis 13, gebildet ist, oder
- **dass** es mit mindestens zwei direkt durch flächige Klebung miteinander verbundenen Bauplatten nach einem der Ansprüche 1 bis 13 gebildet ist, - wobei in beiden Fällen die Deckschichten (3, 4) aus Holz, Schichtholz, Sperrholz, Holzspenmaterial oder Kunststoffgebundenem Holz bestehen.

17. Wand- oder Deckenelement,
**dadurch gekennzeichnet, dass** es mit einer tragfähigen Bauplatte (1) oder mit mehreren derartigen flächig aneinander gebundenen Bauplatten (1) nach einem der Ansprüche 1 bis 13 ausgebildet ist, an welche zumindest auf einer Seite eine analog aufgebaute brandausbreitungs-hemmende Bauplatte (1) mit zwei Deckschichten (3, 4) und zwischen denselben angeordneter, mit einem schwer entflamm- und brennbaren Holz bzw. Eichenholz gebildete, Kernschicht (5) mit Schräg-Hohiräumen (6), jedoch mit geringer Dicke von 2 bis 5 cm gebunden ist, wobei die Innenwände und der Grund der Schräg-Hohlräume (6) der Kernschicht (5) mit einer bei Hitzeeinwirkung im Brandfall intumeszierenden Brandschutz-Polymermasse beschichtet sind.

18. Wand-oder Deckenelement,
**dadurch gekennzeichnet, dass** es mit drei miteinander jeweils mittels Distanzhaitekörpern (91) voneinander beabstandet gehaltenen Bauplatten (1, 1', 1") nach einem der Ansprüche 1 bis 13 ausgebildet ist.
- wobei die Distanzhaltekörper (91) in den Zwischenräumen (90) zwischen den Bauplatten (1, 1', 1") jeweils mit einer oder mehreren aneinander gebundenen, die Schräg-Hohlräume (6, 6') aufweisenden Srhrägfaser-Leiste(n) (50, 50') aus Holz gebildet sind, und dieselben so angeordnet sind, dass auch deren Faserung im positiven oder negativen spitzen Winkel schräg zur Fläche der Bauplatten (1, 1') verläuft, oder
- wobei die Dlstanzhaltekörper (91) mit offene Porenstruktur oder freie Hohlräume aufweisenden Körpern, insbesondere mit mineral- oder kunststoffbasierten Schaum- oder Porenkörpern oder mit quer zur Fläche der Deckschichten (3, 4) ausgerichteten Rohrstücken gebildet sind, und der, gegebenenfalls mit einer Stahlarmierung (92) versehene. Zwischenraum (90) zwischen den Bauplatten (1, 1') mit Leca, Leicht-Baustoffmaterial, Leicht-Schaumstoff und/oder einem mineralstoff-basierten, erhärtenden bzw. erhärteten Bindemittel aus Beton, insbesondere Leicht- oder Porenbeton (95), gefüllt ist.

19. Wand-oder Deckenelement,
**dadurch gekennzeichnet,**
- **dass** der Zwischenraum (90) zwischen zwei Bauelementen (1, 1') nach einem der Ansprüche 1 bis 13 und/oder die außen liegenden Flächen der Deckschichten (3, 4) derselben mit einer/einem Haftvermittlungs-Schicht (19), -Besandung, -Folie oder - Netz oder mit einer dünnen, bis maximal 1 cm dicken Schrägfaser-Kernschicht (5) für eine Verbindung des in den Zwischenraum (90) eingebrachten Bindemittels, Betons oder Leichtbetons mit den Bauplatten (1, 1') versehen sind, oder
- **dass** zumindest eine der außenseitigen Deckschichten (3, 4) der Bauplatten (1, 1') nach einem der Ansprüche 1 bis 13 mit einer/einem zumindest Feuchte abweisenden, jedoch Dampfdiffusion zulassenden Putzträger-Schicht, -Folie oder -Netz (181) auf Basis eines Kunststoffs oder Epoxy-Ktebers mit haftungs-erhöhender Besandung oder mit einer bis maximal 1 cm dicken, wie im Anspruch 1 beschriebenen Schrägfaser-Kernschicht (5) versehen ist.

20. Wand-oder Deckenelement,
**dadurch gekennzeichnet, dass** es jeweils direkt an einer Bau- oder Einbaustelle erstellbar ist, indem die beiden Bauplatten (1, 1') nach einem der Ansprüche 1 bis 13 als über Distanzhaltekörper (91) miteinander verbundene und voneinander beabstandete Schalungsplatten einer verlorenen Schalung mit in den Zwischenraum (90) zwischen denselben eingebrachter Stahlarmierung (92) positioniert sind und der Zwischenraum (90) mit einem erhärteten Bindemittel Beton oder Leichtbeton (95) verfüllbar ist und zumindest eines der Bauplatten (1, 1') außenseitig mit einer Putz- und Edelputzschicht (18) versehen ist, wobei als Putzträger für dieselbe eine bis maximal 1 cm dicke wie im Anspruch 1 beschriebene Schrägfaser-Kernschicht (5) vorgesehen ist.

21. Wand- oder Deckenelement (9"'),
**dadurch gekennzeichnet, dass** es mit einer Bauplatte (1) nach einem der Ansprüche 1 bis 13 gebildet ist, an deren zumindest eine Deckschicht (3, 4), außenseitig eine Ausbau-Schicht (190), gebildet mit zumindest einer Brandhemm- und/oder Feuchte- und Wasserabweise-Eigenschaften aufweisenden, Leichtbauplatte, Gipskartonplatte oder einer wasser- oder feuerresistenten Mineralplatte, gebunden ist, oder
- dass es mit einer Bauplatte (1) nach einem der Ansprüche 1 bis 13 gebildet ist, deren Ausbau-Schicht (190) außenseitig mit einem Putzträger (181) oder mit einer denselben umfassenden fertigen Putzschicht (18) versehen ist.

22. Verfahren zur Herstellung von Bauplatten nach einem der Ansprüche 1 bis 13, wobei
- 1.) in Bretter (58) oder Leisten aus Holz in Längserstreckungs-Richtung und somit in Holz-Faserrichtung in Abständen voneinander, unter Belassung von zueinander parallelen Stegen eine Vielzahl von zueinander und zur Holz-Faserungs-Richtung parallelen Längs-Nuten (60) eingefräst werden,
- 2.) unter Bildung einer ersten Lage (U), die mit den Längs-Nuten (60) versehenen Bretter (58) - bezogen auf eine Mittellinie (ml) bzw. auf die Verarbeitungs-Fortbewegungsrichtung (VR) - seitlich aneinanderliegend in einem positiv spitzen Winkel (+β) zur Mittellinie (ml) angeordnet werden,
- auf die so gebildete erste Lage (L1) eine zweite Lage (LII) von ebenfalls seitlich aneinanderliegenden, gleichartigen genuteten Brettern (58) mit negativ spitzem Winkel (-β) zur Mittellinie (ml) aufgebracht und die beiden Lagen LI und LII von zueinander gekreuzt angeordneten genuteten Brettern (58) aneinander gebunden werden, und
- 3.) die Kombination von übereinander gekreuzt angeordneten genuteten Brettern (58) in Verarbeitungs-Fortbewegungsrichtung (VR) kontinuierlich durch eine Presse (HP) geführt und zu einem Schrägfaserbrett verbunden wird, **dadurch gekennzeichnet,**
- **dass** 4.) mittels - jeweils der gewünschten Dicke der herzustellenden Bauplatten entsprechend - voneinander beabstandet geführten Schnitten (S) senkrecht zur Mittellinie (ml) bzw. zur Verarbeitungs-Fortbewegungsrichtung (VR) Doppel- bzw. Mehrfach-Schrägfaser-Leisten (50- 50') gebildet werden,
- **dass** 5.) jede der so erhaltenen Mehrfach-Schrägfaser-Lelsten (50-50') um +90° oder -90° um ihre Längsachse nach vorne oder hinten verdreht wird,
- **dass** 6.) die so gedrehten Mehrfach-Schrägfaser-Leisten (50-50') beleimt und Seit an Seit aneinanderliegend aneinander gebunden werden - und so eine Schrägfaser-Kernschicht (5) bildend - auf eine untere Deckplatte (3) aus Holz oder Holzwerkstoff aufgebracht werden, und
- **dass** 7.) auf die mit den aneinander und an die untere Deckplatte (3) gebundenen Mehrfach-Schrägfaser-Leisten (50-50') bzw. auf die mit denselben gebildete Kernschicht (5) die obere Deckplatte (4) aus Holz oder Holzwerkstoff aufgebracht und eine materialschlüssige Bindung der Kernschicht (5) an die beiden Deckplatten (3, 4) vorgenommen wird.

23. Verfahren nach Anspruch 22 zur Herstellung von Bauplatten nach einem der Ansprüche 1 bis 13, wobei
- 1.) in Bretter (58) oder Leisten aus Holz in Längserstreckungs-Richtung und somit in Holz-Faserrichtung in Abständen voneinander, unter Belassung von zueinander parallelen, vorzugsweise gleichen, Stegen eine Vielzahl von zueinander und zur Holz-Faserungs-Rlchtung parallelen Längs-Nuten (60) eingefräst werden, und
- 2.) unter Bildung einer ersten Lage (LI), die mit den Längs-Nuten (60) versehenen Bretter (58) mit nach oben hin offenen Nuten (60) - bezogen auf eine Mittellinie (ml) bzw, auf die Verarbeitungs-Fortbewegungsrichtung (VR) - seitlich aneinanderliegend in einem positiv spitzen Winkel +(β) zur Mittellinie (ml) angeordnet werden, **dadurch gekennzeichnet,**
- **dass** in einem Zwischenschritt - auf die aneinanderliegenden genuteten Bretter (58) der ersten Lage (LI) eine Zwischenlage (ZI) aus Holz, mit einer Faserung im rechten Winkel zur Mittellinie (ml) bzw. Verarbeitungs-Fortbewegungsrichtung (VR), aufgebracht und an die Stege zwischen den Nuten (60) der Bretter (58) der ersten Lage (LI) gebunden wird,
- **dass** auf die so gebildete erste Lage (LI) bzw. auf die Zwischenlage (ZI) mit nach unten hin bzw. zur genannten Zwischenlage (ZI) hin offenen Nuten (60) eine zweite Lage (LII) von ebenfalls seitlich aneinanderliegenden, mit Längsnuten (60) versehenen Brettern (58) mit negativ spitzem Winkel (-β) zur Mittellinie (ml) aufgebracht und die erste Lage (LI), die Zwischenlage (ZI) und die zweite Lage (LII) flächig aneinander gebunden werden,
- **dass** 3.) die soeben beschriebene Kombination von erster und zweiter Lage (LI, LII) von genuteten Brettern (58) und zwischen denselben angeordneter Zwischenlage (ZI) in Verarbeitungs-Fortbewegungsrichtung (VR) kontinuierlich durch eine Presse (HP) geführt und zu einem Schrägfaserbrett verbunden wird,
- **dass** 4.) mittels - jeweils der gewünschten Dicke der herzustellenden Bauplatten entsprechend - voneinander beabstandet geführten Trenn-Schnitten (S) senkrecht zur Mittellinie (ml) bzw. zur Verarbeitungs-Fortbewegungsrichtung (VR) Doppel- bzw. Mehrfach-Schrägfaser-Leisten (50-50') gebildet werden,
- **dass** 5.) jede der Mehrfach-Schrägfaser-Leisten (50, 50') um +90° oder -90° um ihre Längsachse nach vorne oder hinten verdreht wird
- **dass** 6.) die so gedrehten, zwischen einander jeweils eine Armierungsleiste (7) aufweisenden Mehrfach-Schrägfaser-Leisten (50, 50') beleimt und Seit an Seit aneinanderliegend insgesamt eine Kernschicht (5) bildend, auf eine untere Deckplatte (3) aus Holz oder Holzwerkstoff aufgebracht werden, und
- **dass** 7.) auf die mit den Mehrfach-Schrägfaser-Leisten (50, 50') mit Armierungsleisten (7) gebildete Kernschicht (5) die obere Deckplatte (4) aus Holz oder Holzwerkstoff aufgebracht und eine materialschlüssige Bindung der Kernschicht (5) an die beiden Deckplatten (3, 4) vorgenommen wird.

24. Verfahren nach Anspruch 22 oder 23, **dadurch gekennzeichnet, dass** - dem Prinzip der Bildung der Kernschicht (5) mit den Lagen (LI) und (LII) entsprechend zumindest einmal in gleicher Weise gebildete weitere Lagen (LI) und (LII) auf die ersten beiden Lagen (LI) und (LII) aufgebracht werden und aus den dann durch den Trenn-Schnitt (S) erhaltenen Vierfach-, oder Sechsfach-Leisten die Kernschicht (5) der Bauplatten (1) gebildet wird.

25. Verfahren nach Anspruch 22 oder 23, **dadurch gekennzeichnet, dass** die Winkel (+β) und (-β) der Schräg-Ausrichtung der kontinuierlich zugeführten, übereinander gekreuzt angeordneten genuteten Bretter (58) bzw. von deren Fasern und Längsnuten (60) zur Mittellinie (ml) bzw. zur Verarbeitungs-Fortbewegungsrichtung (VR) jeweils plus oder minus [90° minus (25° bis 80°, bevorzugt 30° bis 80°)] betragen.

26. Verfahren nach einem der Ansprüche 22 bis 25, **dadurch gekennzeichnet,**
- **dass** schon im Zuge des Fräsens der Längsnuten (60) in die Bretter (58) oder Leisten die Nuten (60) unter Benetzung der Nutwände und des Nutgrundes der Schräg-Hohlräume (6, 6') von deren Kernschicht (5) mit einem Flammschutzmittel, insbesondere mit einem intumeszierenden Polymer, insbesondere auf Hydrosilikatbasis, beaufschlagt bzw. besprüht werden, und/oder
- **dass** in die Nuten (60) die Basis für einen durch Erhitzen zu einem Leichtschaum führenden aufschäumbaren Kunststoff eingebracht wird.

27. Verwendung von Bauplatten nach einem der Ansprüche 1 bis 15 oder von Wand- oder Deckenelementen nach einem der Ansprüche 16 bis 21 entweder direkt als Leichtgewicht-, Trenn- und Tragelemente, insbesondere als Wände, Zwischenwände, Zwischendecken oder Zwischenböden für Neu-. Um- und Ausbau von mobilen oder nicht mobilen Bauwerken, Containern, Wohn-Containern, Fertigteil-Bauten, oder aber als, gegebenenfalls nach Art einer verlorenen Schalung zum Einsatz kommende. Verkleidungsplatten, als Wärme- und Schall-Dämm- und Isolierplatten für Bauwerke und Bauwerksstrukturen,
- als hochfeste Leicht-Schalplatten im Baugewebe oder
- für die Ausstattung von Bauten, Bauteilen und Räumlichkeiten, Dachböden oder Kellern von Bauwerken mit Wärme- und Schallschutz-Ver- und - Auskleidungen, oder
- für die Innen-Ausstattung von Gebäuden und Räumlichkeiten, für Schwenk- und Schiebe- oder Sicherheitstüren, oder
- für den Haus-, Contalner-, Schiffs-, Boots- und Mobilheim-, Wohnwagen- und Wohnmobil-Bau, direkt oder als "Sandwichplatten" für die Leichtgewichts-Ausstattung von Fahr- und Flugzeugen, Schiffen, Booten oder Mobilheimen sowie für Böden, Verkleidungen, Einbauten oder Einbaumöbel, oder
- für die Erstellung von Hallen, Kojen, Ständen, Aufbauten und Ausbauten des Messe-, Ausstellungs-, Präsentations- und Markt-Sektors.
- für den Möbelbau sowie für Innenarchitektur- und Gebäude-Ausstattungs-Objekte, oder
- für den Instrumentenbau, für Resonanz- und Schwingungsplatten von Schall-Emissionsgeräten, Lautsprecherboxen oder für Decken und Böden von Instrumenten 28. Verwendung von Bauplatten nach einem der Ansprüche 1 bis 15 mit der Maßgabe, dass sie mit zumindest einer Kernschicht (5) gebildet sind, deren Schräg-Hohlräume (6, 6') mit einer bei Hitzeeinwirkung im Brandfall intumeszierenden Brandschutzmasse beschichtet sind, oder dass sie zumindest an einer Seite mit einer an sie gebundenen Feuerfest-Mineralplatte oder einem derartigen Feuerfestbelag versehen sind oder zumindest eine ihrer Deckschichten direkt mit einer derartigen Feuerfest-Mineralplatte gebildet ist, für die Ausstattung von Bauten, Bauteilen und Räumlichkeiten, Dachböden oder Kellern von Bauwerken mit Feuer-, sowie als Wärme- und Schallschutz-Verklefdungen.

## Claims

1. Building board with a multi-layer structure which is formed with two cover layers that are spatially separated from each other and placed parallel to each other and at least one core layer of wood with multiple cavities placed between them and joined to them, whereby between the two at least one single layers (3, 4) each with a layer, plate or foil material selected from the group consisting of wood, wooden material, laminated wood, plywood, wood chip material or resinbound wood, metals, textile and fiber materials, cardboard, papers plastics, fiber-reinforced plastics, mineral-based construction materials, rock, artificial stone as well as composite materials made of two or more of the materials just named,
as a core layer, at least one single-layer slanted-fiber core layer (5), joined to the named cover layers (3, 4) is placed, which is formed from a wood having unitary fiber structure,
**characterized in that**
- the cavities have a slanted angle to the cover layers (3, 4) and that the fibers of the slanted-fiber core layer form a positive angle (+ α) of +25 to 80° and/or a negative angle (- α) of -25 to -80°, to the area of the two cover layers (3, 4)
whereby additionally the slanted-fiber core layer (5) has a multiplicity of the positively-slanted and/or negatively-slanted slant cavities (6, 6') that fully run through the slanted-fiber core layer (5) are parallel to the particular fiber direction.

2. Building board according to claim 1,
**characterized in**
- **that** between two cover layers (3, 4) as the core layer an at least one slanted cavities core layer (5) joined to the cover layers is placed, which is formed from a wood having a unitary fiber structure whereby the fibers have an angle (+ α) of +30 to 80°, preferably of +40 to +60°, and/or an angle (- α) of -30 to -80°, preferably of -40 to -60°, to the areas of the two cover layers (3, 4).

3. Building board according to claim 1 or 2, **characterized in**
- **that** the core layer (5) is formed by slanted-fiber strips (50, 50') that lie on each other on the longitudinal side and are joined to each other each alternately one to one or in series of more than one identically positively-slanted or negatively-slanted, slant fiber strips (50 or 50') alternately, these wood strips (50, 50') - in relation to the strips direction and to the areas of the cover layers (3, 4) - having positively or negatively slanted fiber structure, and
- once (50) or in multiples have an unitary positively-slanted slant-fiber direction and a multiplicity of slanted cavities (6), recesses, notches or boreholes being parallel to the positively-slanted slant fibers and
- once (50') or in multiples have an unitary negatively-slanted slant-fiber direction and a multiplicity of slanted cavities (6), being parallel to the negatively-slanted slant fibers.

4. Building board or structural unit according to claim 3,
**characterized in that** the slanted-fiber strips (50, 50') of the core layer (5) are formed from woods identical to each other.

5. Building board according to one of claims 3 or 4,
**characterized in**
- **that** the core layer (5) is formed by two slanted-fiber partial layers (T1, T2) that lie face to face on each other, whose slanted-fiber core layer (5) formed each in its makeup of the alterating positively-slanted and negatively-slanted slant-fiber strips (50, 50') alternating with each other one to one or each in rows of more than one strip (50, 50'), whereby one of the partial layers (T1, T2) or the direction of the course of the slanted-fiber strips (50, 50') that form them is placed at an angle (β) of 30° to 120°, preferably at an angle of 90°, to each other partial layer (T2, T1) or to the course of the slanted-fiber strips (50, 50'), or
- **that** the positive and negative slanted-fiber strips of the partial layers (T1, T2) are configured parallel to each other, or
- **that** the core layer (5) is formed between the cover layers (3, 4) by three slanted-fiber partial layers (T1, T2, T3) each in its structure appropriately embodied of the core layer according to claim 2, whereby
- either the first and the third partial layer (T1) and (T3) have slanted-fiber strips (50, 50') that are directed aslant parallel to each other, and the second partial layer (T2) placed between same (T1, T3) is placed at an angle in the range from 30° to 120°, optionally from 30 to 60°, preferably at an angle of 90°, to the other two partial layers (T1, T3),
- or, the second partial layer (T2) is turned relative to the first partial layer (T1) at 120° and the third partial layer (T3) is turned relative to the second partial layer (T2) at additional 120°,
- whereby no interlayer or a thin interlayer of wood or a wooden material, is placed between the partial layers (T1, T2 or T1, T2, T3) and is joined with the partial layers (T1, T2) or (T1, T2, T3).

6. Building board according to one of claims 3 or 4,
**characterized in**
**that**
the core layer (5) is formed by a preferably even number of slanted-fiber partial layers (T1, T2...), each of whose is formed by positively-slanted and/or negatively-slanted slanted-fiber strips (50, 50'),
- whereby all the positive slanted-fiber strips (50) of the first partial layer (T1) have the same positively-slanted slant-fiber direction and a multiplicity of positively-slanted slant cavities (6), positively slanted parallel to the slanted fibers (50), and
- whereby all the negative slanted-fiber strips (50) of the second partial layer (T2) have the same negatively-slanted slant-fiber direction and a multiplicity of negatively-slanted slant cavities (6').

7. Building board according to one of claims 1 to 6,
**characterized in**
- **that** the slanted cavities (6, 6') in the core layer (5) or in a partial layer (T1, T2, T3...) of same have cavity cross sections possessing equal surface area and/or geometric shape, and/or are equidistant from each other in the direction of longitudinal extension of the slanted-fiber strips (50, 50') and.
- **that** the relation of the entirety of the cross sectional surface of the slanted cavities (6, 6') in the core layer (5) or in its partial layers (T1, T2, T3...) to the entirety of the cross sectional surface(s) (Qm) of the wood forming same, amounts to between 5:1 and 1:5.

8. Building board according to one of claims 1 to 7,
**characterized in**
- **that** the interior walls and the base of the slant cavities (6, 6') of the core layer (5) or of their partial layers (T1, T2, T3....) are coated with an intumescing polymer mass that protects against fire or prevents fires from propagating, which expands due to heat action in the case of a fire and fills the slanted cavities (6, 6"), on the basis of silicates containing structure water and/or
- **that** the slant cavities (6, 6') are filled with an artificial-resin light foam mass, based on polyurethane or polyacryl.

9. Building board according to one of claims 1 to 8, **characterized in**
- **that** the core layer (5) or their partial layers (T1, T2, T3) is shaped with a comb-like cross sectional shape with base and comb beams (53) that are arrayed perpendicular to the cover surfaces (3, 4) and tooth extensions or toothed ribs (52) that project away from same, preferably at a right angle, but positively slanted or negatively slanted to the cover layers (3, 4), whereby the interdental spaces (54) between same form the slanted cavities (6, 6') of the core layer (5), and
- **that** the interdental spaces (54) of the slanted-fiber strips (50, 50') are embodied as grooves, slits or channels that are parallel to each other, and are formed by cutting, one beneath the other essentially of the same depth, and/or cross-sectional surface and/or cross sectional shape, and/or
- **that** the interdental spaces (54) of the core layer (5) have essentially elongated parallelogram shapes and rect-angle cross-sectional shapes, optionally with a rounded base, whereby the rectangular length in relation to the rectangular width is (10:1) to (1:1), and optionally (5:2) to (4:3) and/or
- **that** the width (br) of the interdental spaces (54) is one half to double the width (bz, bb) of the tooth extensions or toothed ribs (52) and/or of the comb beam (53), or that the named widths (br, bb, bz) essentially are equal to one another.

10. Building board according to one of claims 1 to 9,
**characterized in**
- **that** the core layer (5) formed by the positively-slanted and negatively-slanted cavities (6) is formed with straight-line slanted positively-slanted and negatively-slanted fiber strips (50, 50') placed in rows directly onto each other, having the same width among them,
- which are placed either directly lying direct on each other longitudinally or joined one to another,
- whereby for this case the two cover layers (3, 4) are shaped from, optionally thin, compact wooden fixing plates or homogenous plates or from of resin-bound wood, plates, without a distinct fiber direction, or
- **that** between each of such adjoining slanted-fiber strips (50, 50') adjoining on their vertical longitudinal flanks turned toward each other, reinforcement strips (7) made of wood, metal or plastic are placed that run parallel to each other and are joined to same,
- whereby the cover layers (3, 4) are made of wood, whose structuring fibers are perpendicular to the direction of the longitudinal extension of the reinforcing strips (7) and of the structuring of same extending in the same direction.

11. Building board according to claim 10,
**characterized in**
- **that** the reinforcement strips (7) have an elongated rectangular cross section, and with their upper and lower side, narrow-side surfaces they are joined in material-locking fashion to the cover layers (3, 4).

12. Building board according to one of claims 10 to 11,
**characterized in**
- **that** for the case that the cover layers (3, 4) are formed with a parallel direction of the fibers or structuring of the wood that forms them, the reinforcing strips (7) in the core layer (5) in their longitudinal extension are so arranged that the longitudinal extension of the reinforcing strips (7) and of the fibers of the wood that forms them, runs essentially perpendicular to the direction of the fibers of the cover layers (3, 4).

13. Building board according to one of claims 1 to 12,
**characterized in**
- **that** the core layer (5) is formed of a customary wood, selected from the group consisting of oak, spruce, pine, poplar and willow, such a wood of lesser quality or from or with a lightweight wood selected from a group consisting and of balsa, okume, abachi and wawa, with a density in the range from 0.1 to 0.8 g/cm³, and/or
- **that** the cover layers (3, 4) are formed with woods identical to each other and/or with material thicknesses identical to each other, or
- **that** the cover layers (3, 4) are formed with types of wood differing from each other and/or with material thicknesses differing from each other, but with equal physical and direction-dependent equal alteration behavior, when the environmental conditions change, such as when temperature or humidity are altered and
- **that** the building board is closed at least on two narrow-side flanks, that run opposite each other, and preferably on all of them, with cover strips (2) joined to same, preferably of wood.

14. Building board according to one of claims 3 to 13,
**characterized in**
- **that** between a concave-curved, lower cover layer (3) and an upper, equally convex-curved cover plate (4), with its lower longitudinal edges of the slanted fiber strips lying on one another and toward the top, a slanted-fiber core layer (5) is placed with alternating individual positive and negative slanted-fiber strips (50, 50'), tending outwards to match the curvature of the deck plates (3, 4), or with dual slanted-fiber strips (50, 50').

15. Building board according to one of claims 1 to 14,
**characterized in**
- **that** it is embodied as a sound-attenuation or acoustic board and toward the acoustic source has a cover layer (4) that is turned toward the acoustic source, which is embodied with the same through-running acoustic passage openings (41), and the core layer (5) is directly acoustically accessible through these openings (41), whereby the interior walls of the slanted cavities are coated with a fire protection polymer mass that intumesces when subject to heat action in case of a fire, or
- **that** the building board (1) is embodied as a vibration and resonance board, for bases, walls and covers of noise generating and propagating devices, speaker boxes or musical instruments, whereby optionally one of its cover layer (3, 4) is embodied with the same through-running acoustic propagation openings being capable of noise propagation through these openings, or
- **that** the building board is embodied as a safety building board or as a door leaf, with two cover layers (3, 4) made from wood or from a wooden material and reinforcement strips (7) whereby the slanted-fiber core layer (5) which is present, has, the slanted cavities (6, 6') coated with intumescing fire-retardant material or filled with lightweight foam, of reinforcement strips (7) placed at intervals from each other and arranged parallel to each other, and made of steel or aluminum, and/or
- **that** on at least one of the cover layers (3, 4) of wood, on the outer side, a metal plate or foil is adhesive-joined, or,
- **that** in place of the cover layers of wood, a metal plate or foil is directly joined to the core layer (5), whereby an adhesive that intumesces due to heat action in case of a fire be used to join the metal plate or foil.

16. Wall or ceiling element,
**characterized in**
- **that** it is formed with at least two building boards (1, 1') according to one of claims 1 to 13, are held at a distance from each other by means of spacer bodies (91), made of wood, and are arranged parallel to each other and connected by these with each other, or
- **that** it is formed with at least two building boards (1, 1') according to one of claims 1 to 13, flat glued together - whereby in both cases the cover layers (3, 4) consist of wood, laminated wood, plywood, wood chip material, or resin bound wood.

17. Wall or ceiling element,
**characterized in that** it is embodied with a building board (1) able to be load-bearing, or with more than one building boards (1) according to one of the claims 1 to 13 joined face to face one to the other, on which, at least on one side, a building board (1) with two cover layers (3, 4) and a core layer (5) placed between same with slanted cavities (6), however with a small size or thickness, of 2 to 5 cm, whereby the inner walls and possibly also the bases of the slanted cavities (6) of the core layer (5) are coated with a fire-protection polymer mass that intumesces when exposed to heat in the case of fire.

18. Wall or ceiling element,
**characterized in that** it is formed with three building boards (1, 1', 1") according to one of claims 1 to 13, that are kept apart from each other by spacer bodies (91)
- whereby the spacer bodies (91) in the intermediate spaces (90) between the building boards (1, 1') each with one or more slanted-fiber strips (50, 50'), made of wood, joined to each other, having the slanted cavities (6, 6') and slanted fibers or structuring, that their structuring also runs at a positive or negative acute angle to the area of the building boards (1, 1'), or
- whereby the spacer bodies (91) are formed by bodies that have an open pore structure or free cavities, especially by mineral or plastic-based foam or pore bodies or by pipe pieces running transverse to the area of the cover layers (3, 4), and the intermediate space (90) between the building boards (1, 1'), optionally provided with a steel reinforcement (92), is filled with Leca, light construction material, light foam material and/or a mineral-based, hardening or hardened binder, of concrete, especially lightweight or porous concrete (95).

19. Wall or ceiling element,
**characterized in**
- **that** the intermediate space (90) between two building boards (1, 1') according to one of the claims 1 to 13 and/or the exterior surfaces of te cover layers (3, 4) are provided with an adhesion-promoting layer (19), sand covering, foil, network or with a thin slanted-fiber core layer (5) but without cover layers for an adhesive or close connection of the binder, concrete or lightweight concrete with the building boards (1, 1') inserted into the intermediate space (90) or
- **that** at least one of the exterior cover layers (3, 4) of the building board (1, 1') according to one of claims 1 to 13 is provided with a plaster base layer, foil or network (181) that at minimum resists moisture but preferably permits diffusion of vapor, especially based on a plastic or an epoxy adhesive with a sand coating that enhances adhesion, or with a thin slanted-fiber core layer (5) as described in claim 1 up to a maximum of 1 cm in its thickness.

20. Wall or ceiling element (9'"),
**characterized in that** it is producable directly at a construction or installation site locally, whereby the two building boards (1, 1') according to one of claims 1 to 13, were positioned as formwork boards of a "lost formwork" connected with each other via the spacer bodies (91) and placed at an interval from each other with a steel reinforcement (92) inserted into the intermediate space (90) between same, and the intermediate space (90) just named is able to be filled with a hardened binder, concrete or light concrete (95), and at least one of the building boards (1, 1') on its outside is provided with a plaster or patent plaster layer (18), whereby an up to a maximum of 1 cm thick slanted-fibre core layer as described in claim 1, is provided as the plaster base for same.

21. Wall or ceiling element (9'"),
**characterized in that** it is formed with a building board (1) according to one of claims 1 to 13, onto which an (interior) permanent layer (190) is joined to at least one cover layer, preferably onto both cover layers (3, 4) on the outside, with at least one lightweight board, having fire resistant and/or moisture and water deflecting properties, especially with a sandwich-type plaster board or a water- and fire-resistant mineral plate, or
- that it is formed with a building board (1) according to one of claims 1 to 13, whose permanent layer (190) is provided on the outside with a plaster base (181) or with a ready plaster layer (18) surrounding the named plaster base.

22. Procedure for manufacturing building boards according to one of claims 1 to 13, whereby
- 1.) a multiplicity of longitudinal grooves (60) parallel to each other and to the wood structuring direction are cut into planks (58) or strips of wood in the longitudinal extension direction, by leaving ribs parallel to another and thus into the wood-fiber or structuring direction at intervals from each other,
- 2.) while forming a first layer (LI), the planks (58) which are provided with longitudinal grooves (60) - related to a center line (ml) or to the forward direction of processing (VR) - are placed laterally at a positive acute angle (+ β) to the center line (ml),
- onto the first layer (LI) thus formed a second layer (LII) is applied, likewise with identical planks (58) placed laterally negative acute angle (- β) to the center line (ml), and the two layers LI and LII of grooved planks (58) arranged crosswise to each other are joined, and
- 3.) the just-described combination of grooved planks (58) placed crosswise over each other in the forward direction of processing (VR) are continuously fed through a press (HP) and joined to a slanted-fiber board,
**characterized in**
- **that** 4.) dual or multiple slanted fiber strips (50, 50') are formed by means of cuts (S) made at intervals to each other, in each case matching the desired thickness of the building boards to be produced, perpendicular to the center line (ml) or to the forward motion direction (VR) of processing,
- **that** 5.) each of the multiple slanted-fiber strips (50-50') is turned forward or backward by +90° or -90° about its longitudinal axis
- **that** 6.) the multiple slanted-fiber strips (50, 50') thus turned are applied, glued and joined side to side to each other, thus forming a slanted-fiber core layer (5) on a lower cover layer (3) of wood or wooden material, and
- **that** 7.) the upper cover layer (4) of wood or wooden material is applied onto the multiple slanted-fiber strips (50, 50') joined to each other and to the lower cover layer (3) and onto the slanted-fiber core layer (5) formed with same, and a material-locking connection is made of the core layer (5) to the two cover layers (3, 4).

23. Procedure according to claim 22 for manufacturing building boards according to one of the claims 1 to 13, whereby
- 1.) a multiplicity of longitudinal grooves (60) that are parallel to each other and to the wood structuring direction are cut into planks (58) or strips of wood, in the direction of longitudinal extension and thus in the wood fiber or structuring direction, at preferably equal intervals to each other, while leaving preferably identical ribs parallel to each other, and
- 2.) while forming a first layer (LI), the planks (58) which are provided with longitudinal upward open grooves (60) - related to a center line (ml) or to the forward direction of processing (VR) - are placed laterally, at a positive acute angle + (β) to the center line (ml), **characterized in**
- **that** in an intermediate step, an intermediate layer (ZI) of wood with a structuring at a right angle to the center line (ml) or to the processing direction (VR), is applied onto the grooved planks (58) of the first layer (LI), that lie one on another, and is joined to the ribs between the grooves (60) of the planks (58) of the first layer (LI),
- **that** a second layer (LII) likewise of identical planks (58) provided in the same manner with longitudinal grooves (60) and likewise laterally lying on each other, is applied onto the first layer (LI) thus formed, or onto the intermediate layer (ZI), preferably with grooves (60) that are open downward or toward the named intermediate layer (ZI), with an identical, but negative acute angle (- β) to the center line (ml), and the first layer (LI), the intermediate layer (ZI) and the second layer (LII) are joined to one another, and
- **that** 3.) the just-described combination of a first and second layer (LI, LII) of grooved planks (58) and intermediate layer (ZI) placed between same in the forward direction of processing (VR) are continuously fed through a press (HP) and joined to a slanted-fiber board,
- **that** 4.) by means of separating cuts (S) made at intervals to each other, in each case matching the desired thickness of the building board to be produced, dual or multiple slanted fiber strips (50, 50') are formed perpendicular to the center line (ml) or to the forward motion direction (VR) of processing,
- **that** 5.) each of the multiple slanted-fiber strips (50, 50') is turned forward or backward by +90° or -90° about its longitudinal axis
- **that** 6.) the multiple slanted-fiber strips (50, 50') thus turned, each having a reinforcing strip (7) between them, are applied, glued and joined side to side to each other, thus forming a slanted-fiber core layer (5) on a lower cover layer (3) of wood or wooden material, and
- **that** 7.) the upper cover layer (4) of wood or wooden material is applied onto the core layer (5) formed by the multiple slanted-fiber strips (50, 50') with reinforcing strips (7) and a material-locking connection is made of the core layer (5) to the two cover layers (3, 4).

24. Procedure according to claim 22 or 23,
**characterized in that**
- in accord with the principle of forming the core layer (5) of layers (LI) and (LII), at least once more additional layers (LI) and (LII) are applied in the same manner onto the first two layers (LI) and (LII), and the slanted-fiber core layer (5) of the building boards (1) is formed from the quadruple and sextuple strips obtained via the separating cut (S).

25. Procedure according to one of the claims 22 to 23,
**characterized in**
**that** the angles (+ β) and (- β) of the slanted direction to the center line (ml) or to the direction of feed (VP), of the grooved planks (58) that are continuously fed, and placed crosswise to each other, or of their fibers and longitudinal grooves (60) are plus or minus [90° minus (25 to 80°), preferably 30 to 80°)].

26. Procedure according to one of claims 22 to 25,
**characterized in**
- **that** already in the course of cutting the longitudinal grooves (60) into the planks (58) or strips the grooves (60) are acted on or sprayed while wetting the groove walls and groove base of the slanted cavities (6, 6') of their core layer (5) with a flame retardant, preferably with an intumescing polymer, especially based on hydrosilicate, and/or
- **that** the basis for a foaming plastic, that results in a lightweight foam when heated, is inserted into the grooves (60).

27. Use of building boards according to one of claims 1 to 15 or of wall or ceiling elements, according to one of the claims 16 to 21, either directly as a lightweight, separating and load-bearing units, especially as walls, partitions, intermediate covers or floors for new construction, rebuilds and development of structures, containers, residential containers, ready-component structures, that are mobile or not mobile, or as paneling boards that come into use if optionally necessary according to a "lost formwork" type, especially as lining plates, thermal and acoustic damping plates and insulation plates, for structures and construction structures,
- as high-strength lightweight shell plates in the construction trade or
- for equipping structures, structural components and accommodations, rooves, cellars of structures with thermal and acoustic protection linings and panelings or
- for interior equipping of buildings and accommodations, for pivoting and sliding doors or safety doors or
- for construction of homes, containers, ships, boats, mobile homes, recreational vehicles and campers, directly or as sandwich plates for lightweight equipping of motor vehicles and aircrafts, ships, boats, mobile homes, as floors, panelings, internal fittings, built-in furniture or
- for creating halls, berths, stands, setups and developments in the fair, exhibition, presentation and market industry or
- for building furniture as well as for accessory items of interior furnishings and equipping of buildings or
- for constructing instruments, for resonance and vibration plates of acoustic emission devices such as speaker boxes or for ceilings and floors, of instruments.

28. Use of building boards according to one of claims 1 to 15 in accordance with their being formed by at least one core layer (5), whose slanted cavities (6, 6') are coated with a mass that protects from fire which intumesces due to heat action in case of fire, or that at least on one side they are provided with a fireproof mineral plate or similar fireproof coating that is joined to it, or that at least one fireproof mineral plate is joined to its cover layers, for the equipping of structures, structural parts and accommodations, roves or cellars of structures with fire protection as well as thermal and acoustic panelings.

## Revendications

1. Plaque de construction à une structure à plusieurs couches, qui est formée avec deux couches de recouvrement disposées d'une façon espacée l'une de l'autre et parallèle l'une à l'autre, et au moins une couche nucléaire de bois disposée entre ceux-ci et reliée à ceux-ci ayant une pluralité des cavités disposées dans celle-ci,
dans laquelle entre les deux couches de recouvrement (3, 4) à au moins une couche, formées avec un matériau plan de couche, de plaque ou de feuille de la groupe de bois et matériau de bois, bois en couches, de contreplacage, de matière en particules de bois, de bois imprégné de matière synthétique, des métaux, des matières textiles et de fibres, de carton, des papiers, des matières artificielles, des matières artificielles renforcés par des fibres, des matériaux de construction basés aux minéraux, de pierre ainsi que des matières composées de deux ou plus des matières, qui ont venus d'être mentionnées,
au moins une couche de noyau à fibre diagonale (5) est disposé comme couche de noyau, qui comprend au moins un pli, est liée aux couches de recouvrement (3, 4) susmentionnées, et est formée du bois ayant des fibres uniformes,
**caractérisée en ce, que** les cavités ont un angle aigu par rapport aux dites couches de recouvrement, et que les fibres de la couche de noyau à fibres diagonales (5) ont un angle positif (+α) de +25 à +80° et/ou un angle négatif (-α) de -25 à -80° par rapport à la surface des deux couches de recouvrement (3, 4),
dans laquelle de plus les cavités inclinées (6, 6') de façon positive et/ou négative, qui traversent la couche de noyau à fibres diagonales (5) complètement en nombre multiple, s'étendent parallèlement à la direction respective des fibres inclinées.

2. Plaque de construction selon la revendication 1,
**caractérisée en ce,**
**qu**'entre les deux couches de recouvrement (3, 4) au moins une couche de noyau à fibre diagonale (5), liée à ceux-ci, est disposé comme couche de noyau, qui comprend au moins un pli et est formée du bois ayant des fibres uniformes, dont les fibres ont un angle (+α) de +30 à +80°, de préférence de +40 à +60°, et/ou un angle (-α) de -30 à -80°, de préférence de -40 à -60° par rapport à la surface des deux couches de recouvrement (3, 4).

3. Plaque de construction selon la revendication 1 ou 2,
**caractérisée en ce,**
**que** la couche de noyau (5) est formée avec des listeaux à fibres diagonales (50, 50'), qui sont contiguës au côté longitudinal et sont lié, de bois, qui présente des fibres diagonales respectivement uniforme par listeau (50, 50') et sont inclinées soit positivement, soit négativement par rapport à l'étendue de listeau et aux surfaces des couches de recouvrement (3, 4), les listeaux à fibres diagonales (50, 50') présentant soit un à un en alternance, soit en séries de plus d'une listeau à fibres diagonales (50 ou 50') à inclinaison positive ou négative
- une fois (50) ou plusieurs fois une orientation uniforme des fibres diagonales à inclinaison positive et une pluralité de cavités, creux, cannelures ou alésages inclinés (6), qui sont parallèles par rapport aux fibres diagonales d'inclinaison positive, et inclinés d'une façon positive et
- une fois (50') ou plusieurs fois une orientation uniforme des fibres diagonales à inclinaison négative et une pluralité de cavités, creux, cannelures ou alésages inclinés (6), qui sont parallèles par rapport aux fibres diagonales d'inclinaison négative, et inclinés d'une façon négative.

4. Plaque de construction selon la revendication 3,
**caractérisée en ce, que** les listeaux à fibres diagonales (50, 50') de la couche de noyau (5) sont formés en bois filés égaux l'un par rapport à l'autre.

5. Plaque de construction selon la revendication 3 à 4,
**caractérisée en ce,**
- **que** la couche de noyau (5) est formée avec deux plis partiels (T1, T2) situés en nappe l'un à l'autre, dont chacun est formée avec les listeaux à fibres diagonales (50, 50') alternant un à un ou en séries respectives de plus d'une listeau (50 ou 50') à inclinaison positive ou négative en formant la couche de noyau à fibres diagonales (5), un des plis partiels (T1, T2) ou la direction des listeaux à fibres diagonales (50, 50') de celle-ci étant disposée sous un angle (ß) de 30° à 120°, de préférence sous un angle de 90° par rapport à l'autre pli partiel (T2, T1) ou la direction des listeaux à fibres diagonales (50', 50) de ceci, ou
- **que** les listeaux à fibres diagonales positifs et négatifs des plis partiels (T1, T2) sont parallèles l'un par rapport à l'autre, ou
- **que** la couche de noyau (5) est formée avec trois plis partiels à fibres diagonales (T1, T2, T3) entre les couches de recouvrement (3, 4), dont chacune est formée en correspondance avec la couche de noyau (5) selon la revendication 2, dans laquelle
- ou le premier et le troisième pli partiel (T1 et T3) présentent des listeaux à fibres diagonales (50, 50') orientés parallèlement l'un à l'autre et inclinés, et le deuxième pli partiel (T2), disposé entre ceux-ci (T1, T3), avec ses listeaux à fibres diagonales (50, 50'), est disposé sous un angle dans la domaine de 30 à 120°, le cas échéant de 30 à 60°, de préférence de 90°, par rapport aux listeaux à fibres diagonales (50, 50') des deux autres plis partiels (T1, T3),
- ou le deuxième pli partiel (T2) est disposé d'une façon tournée par 120° par rapport au premier pli partiel (T1), et le troisième pli partiel (T3) est disposé d'une façon tournée par des autres 120° par rapport au deuxième pli partiel (T2),
- pas de pli intermédiaire ou un pli intermédiaire mince de bois ou d'un matériau de bois étant disposé entre les plis partiel (T1, T2 ou T1, T2, T3) et relié aux plis partiels (T1, T2 ou T1, T2, T3).

6. Plaque de construction selon la revendication 3 à 4,
**caractérisée en ce,**
**que** la couche de noyau (5) est formée avec un nombre, préférablement pair, des plis partiels à fibres diagonales (T1, T2, ...), dont chacune est formée avec des listeaux à fibres diagonales (50, 50') inclinés de manière positive et/ou négative,
- dans laquelle tous les listeaux à fibres diagonales (50) positivement inclinés du premier pli partiel (T1) ont la même orientation des fibres diagonale inclinée positivement et une pluralité des cavités à inclinaison (6) inclinée positivement parallèles aux fibres diagonales
et
- dans laquelle tous les listeaux à fibres diagonales (50') négativement inclinés du deuxième pli partiel (T2) ont la même orientation des fibres diagonale inclinée négativement et une pluralité des cavités à inclinaison (6') inclinée négativement, parallèles aux fibres diagonales.

7. Plaque de construction selon une quelconque des revendications 1 à 6,
**caractérisée en ce,**
- **que** les cavités inclinées (6, 6') dans la couche de noyau (5) ou dans un pli partiel (T1, T2, T3...) de celle-ci ont mutuellement la même grandeur de surface et/ou des coupes transversales de même forme géométrique et/ou sont espacées également en étendue longitudinale des listeaux à fibres diagonales (50, 50'), et
- **que** le rapport de la totalité des superficies des cavités inclinées (6, 6') dans la couche de noyau (5) ou dans les plis partiels (T1, T2, T3...) de celle-ci à la totalité des superficie(s) (Qm) du bois, qui forme ceux-ci, se monte entre 5:1 et 1:5.

8. Plaque de construction selon une quelconque des revendications 1 à 7,
**caractérisée en ce,**
- **que** les parois intérieures et le fond des cavités inclinées (6, 6') de la couche de noyau (5) ou des plis partiels (T1, T2, T3...) de celle-ci sont couverts d'une masse de polymère d'ignifugation ou d'arrêt de propagation d'incendie intumescente, qui s'étend sous l'action de chaleur et remplit les cavités inclinées (6, 6') à la base des silicates contenant l'eau de structure et/ou
- **que** les cavités inclinées (6, 6') sont remplis d'une masse d'écume léger de résine artificielle à la base de polyuréthane ou polyacrylique.

9. Plaque de construction selon une quelconque des revendications 1 à 8,
**caractérisée en ce,**
**que** la couche de noyau (5) ou des plis partiels (T1, T2, T3) de celle-ci est/sont formée/formés avec des listeaux à fibres diagonales (50, 50') d'une forme, en section transversale, du type de peigne ayant une barre de peigne (53) disposée de façon perpendiculaire par rapport aux surfaces de recouvrement (3, 4) et des prolongements de dent (52) faisant saillie à angle droit, mais s'étendant positivement inclinés ou négativement inclinés par rapport aux couches de recouvrement (3, 4), dans laquelle les interstices des dents (54) entre ceux-ci forment les cavités inclinées (6, 6') de la couche de noyau (5), et
- **que** les interstices des dents (54) des listeaux à fibres diagonales (50, 50') sont formés comme des rainures, des rigoles, des fentes ou des coupures parallèles entre eux, formés par un fraisage et présentant mutuellement la même profondeur et/ou superficie et/ou forme de section transversale, et/ou
- **que** les interstices des dents (54) de la couche de noyau (5) présentent une forme en section transversale de parallélogramme oblongue ou de rectangle, le cas échéant avec un fond arrondi, dans lesquelles la longueur de rectangle en relation à la largeur de rectangle se monte à (10:1) à (1:1) et, le cas échéant, (5:2) à (4:3), et/ou
- **que** la largeur (br) des interstices des dents (54) se monte à la moitié jusqu'au double de la largeur (bz, bb) des prolongements de dent (52) et/ou de la barre de peigne (53), ou que lesdites largeurs (br, bb, bz) sont mutuellement égaux.

10. Plaque de construction selon une quelconque des revendications 1 à 9,
**caractérisée en ce,**
- **que** la couche de noyau (5) est formée avec des listeaux à fibres diagonales (50, 50') positivement inclinés et négativement inclinés, qui sont disposés linéairement de façon droite et directement de façon alignée, et qui sont mutuellement de même largeur,
- qui sont disposés ou directement et longitudinalement alignés,
- les couches de recouvrement (3, 4), en ce cas, étant formées des panneaux de particules de bois, des panneaux homogènes de bois ou des panneaux de bois imprégné de matière synthétique, le cas échéant minces, compactes, sans une orientation prononcée des fibres, ou
- **que** des listeaux d'armature (7), parallèles l'un par rapport à l'autre, de bois, de métal ou de matière artificielle sont respectivement disposés entre les listeaux à fibres diagonales (50, 50') adjacentes l'un à l'autre et en collant aux flancs en face longitudinaux verticaux de ceux-ci et liés à ceux-ci,
- les couches de recouvrement (3, 4) étant de bois, dont les fibres sont orientées perpendiculairement à la direction de l'étendue longitudinale des listeaux d'armature (7) et des fibres de ceux-ci, qui s'étendent en même direction.

11. Plaque de construction selon la revendication 10,
**caractérisée en ce,**
**que** les listeaux d'armature (7) ont une section transversale oblongue rectangulaire, et leurs surfaces latéraux étroites au côté haut et bas sont liés par les matières propres aux couches de recouvrement (3, 4)

12. Plaque de construction selon une quelconque des revendications 10 à 11,
**caractérisée en ce,**
- **que** les listeaux d'armature (7), en cas que les couches de recouvrement (3, 4) sont formées avec une orientation parallèle les un par rapport à les autres des fibres du bois, qui les forme, sont disposés dans la couche de noyau (5) en direction de l'étendue longitudinale de manière, que l'étendue longitudinale des listeaux d'armature (7) et des fibres du bois, qui les forme, s'étendent perpendiculairement à l'orientation des fibres des couches de recouvrement (3,4).

13. Plaque de construction selon une quelconque des revendications 1 à 12,
**caractérisée en ce,**
**que** la couche de noyau (5) est formée du bois usuel de la groupe de chêne, d'épicea, de pin, de peuplier et de saule, avec un tel bois d'une qualité inférieure ou d'un bois léger de la groupe de bois de balsa, d'okoumé, d'abachi et d'obèche d'une densité dans la domaine de 0,1 à 0,8 g/cm³, et/ou
- **que** les couches de recouvrement (3, 4) sont formées avec des bois mutuellement égaux et/ou avec des épaisseurs de matière mutuellement égaux, ou
- **que** les couches de recouvrement (3, 4) sont formées avec des sortes différentes l'une de l'autre de bois et/ou avec des épaisseurs de matière différentes l'une de l'autre, mais avec un comportement physique d'altération mutuellement égal et en fonction de direction lors d'un changement des conditions de l'ambiance, et
- **que** la plaque de construction est clôturée à au moins deux flancs de côtés étroits opposés, préférablement à tous les flancs de côtés étroits, par des listeaux de recouvrement (2) liés à ceux-ci, de préférence de bois.

14. Plaque de construction selon une quelconque des revendications 3 à 13,
**caractérisée en ce,**
**qu**'entre une couche extérieur (3) inférieure courbée de façon concave et une couche extérieure supérieure courbée de même manière, une couche de noyau à fibres diagonales (5) est disposé vers le haut, dont les arêtes longitudinales inférieures des listeaux à fibres diagonales (50, 50') qui la forment, est contigüe l'une à l'autre, avec des listeaux à fibres diagonales (50, 50') se dispersant en correspondance avec la courbature des couches de recouvrement (3, 4) et étant alternativement positifs et négatifs ou encore avec des listeaux à fibres diagonales doubles.

15. Plaque de construction selon une quelconque des revendications 1 à 14,
**caractérisée en ce,**
- **qu**'elle est formée comme une plaque d'absorption de son ou acoustique, et une couche extérieure (4) est formée vers la source sonore ayant des ouvertures de passage de son (41), et que la couche de noyau (5) est directement accessible au son, dans laquelle les parois intérieures des cavités inclinée sont couvertes par une masse de polymère d'ignifugation intumescente sous l'action de chaleur en cas d'incendie, ou
- que la plaque de construction (1) est formée comme une plaque d'oscillation ou de résonance pour des planchers, des parois et des plafonds des appareils générateurs de son et des appareils de dissipation de son, des enceintes ou des instruments de musique, dans laquelle, le cas échéant, une de ses couches de recouvrement (3, 4) est formée avec les ouvertures de dissipation des son, qui la traversent, et la couche de noyau (5) est effective en dissipant le son à travers ces ouvertures, ou
- que la plaque de construction est formée comme une plaque de construction de sécurité ou comme vantail de porte ayant deux couches de recouvrement (3, 4) de bois ou d'un matériau de bois et des listeaux d'armature (7), dans laquelle les listeaux d'armature (7) existantes, qui consistent d'acier ou d'aluminium et qui sont disposés dans la couche de noyau (5), qui présente des cavités inclinées couvertes d'un matériau intumescent et arrêtant la propagation d'incendie et remplis d'un produit alvéolaire, de façon espacés l'un de l'autre et parallèles l'un par rapport à l'autre et/ou
- qu'une plaque ou feuille de métal est liée extérieurement à au moins une couche de recouvrement (3, 4) de bois par collage, ou
- qu'une plaque ou feuille de métal est directement liée à la couche de noyau (5) au lieu des couches de recouvrement (3, 4) de bois, la liaison de la plaque ou feuille de métal étant effectuée par une colle, qui intumesce sous l'action de chaleur en cas d'incendie.

16. Elément de parois ou de plafond, **caractérisée en ce,**
- **qu**'il est formé d'au moins deux plaques de construction (1, 1') selon une quelconque des revendications 1 à 13, qui sont disposées de façon espacée l'une de l'autre par des corps d'écarteur (91) de bois, parallèlement l'une par rapport à l'autre, et sont reliées l'une à l'autre par ceux-ci, ou
- qu'il est formé d'au moins deux plaques de construction selon une quelconque des revendications 1 à 13, qui sont directement reliées l'une à l'autre par une collage en nappe,
dans lequel, dans les deux cas, les couches de recouvrement (3, 4) consistent de bois, de bois empilé, de contreplacage, de matière en particules de bois ou de bois imprégné de matière synthétique.

17. Elément de parois ou de plafond,
**caractérisée en ce, qu**'il est formé avec une plaque de construction (1) capable à porter ou avec plusieurs plaques de construction (1) de cette sorte liées en nappe l'une à l'autre selon une quelconque des revendications 1 à 13, à laquelle(s) une plaque de construction (1) analogue arrêtant la propagation d'incendie est liée à au moins un côté, qui a deux couches de recouvrement (3, 4) et une couche de noyau (5) disposé entre eux, formée d'un bois difficilement inflammable et combustible ou bois de chêne ayant des cavités inclinée (6), mais une épaisseur petite de 2 à 5 cm, les parois intérieures et le fond des cavités inclinée (6) de la couche de noyau (5) sont couverts dune masse de polymère d'ignifugation intumescente sous l'action de chaleur en cas d'incendie.

18. Elément de parois ou de plafond
**caractérisée en ce, qu**'il est formé avec trois plaques de construction (1, 1', 1") maintenues espacées l'une de l'autre par des corps d'écarteur (91), selon une quelconque des revendications 1 à 13,
- dans lequel les corps d'écarteur (91) dans les espaces (90) entre les plaques de construction (1, 1', 1") sont formés chacun avec un ou plusieurs listeau(x) à fibres diagonales (50, 50') de bois liés l'un à l'autre et présentant les cavités inclinées, et qu'ils sont disposés de manière, que ses fibres aussi s'étendent sous un angle aigu positif ou négatif par rapport à la surface des plaques de construction (1, 1'), ou
- dans lequel les corps d'écarteur (91) sont formés des corps, qui présentent une structure ouverte des pores ou des cavités, en particulier des corps d'écume ou des corps de pores basés aux minéraux ou à une matière artificielle, ou avec des pièces tubulaires orientées transversalement par rapport à la surface des couches de recouvrement (3, 4), et l'espace (90) entre les plaques de construction (1, 1'), le cas échéant pourvu d'une armature d'acier (92), et rempli de leca, d'un matériau léger de construction, d'un produit alvéolaire léger et/ou un liant à base des agrégats minéraux de béton, particulièrement de béton léger ou de pores (95), qui est endurcissant ou endurci.

19. Elément de parois ou de plafond,
**caractérisée en ce,**
- **que** l'espace (90) entre deux éléments de construction (1, 1') selon une quelconque des revendications 1 à 13, et/ou les surfaces de recouvrement des couches de recouvrement (3, 4) de ceux-ci sont pourvues d'une couche d'agent de pontage (19), d'un sablage d'agent de pontage, d'une feuille d'agent de pontage ou d'un filet d'agent de pontage ou d'une couche de noyau à fibres diagonales (5) mince d'une épaisseur de 1 cm en maximum pour une liaison du liant, du béton ou du béton léger introduit dans l'espace (90) avec les plaques de construction (1, 1'), ou
- **qu'**au moins une des couches de recouvrement situées (3, 4) à l'extérieur des plaques de construction (1, 1') selon une quelconque des revendications 1 à 13, est pourvue d'une couche de support d'enduit, d'une feuille de support d'enduit ou d'un filet de support d'enduit (181), qui est au moins hydrofuge, mais admet une diffusion de vapeur, à la base d'une matière artificielle ou d'une colle époxy avec une sablage augmentant l'adhérence ou d'une couche de noyau à fibres diagonales (5) d'une épaisseur de 1 cm en maximum, comme décrit à la revendications 1.

20. Elément de parois ou de plafond,
**caractérisée en ce, qu**'il peut respectivement être établi directement à un chantier de construction ou à une place de montage, en positionnant les deux plaques de construction (1, 1') selon une quelconque des revendications 1 à 13 comme des panneaux de coffrage d'un coffrage perdu, qui sont reliés l'un à l'autre par des corps d'écarteur (91) et sont espacés l'un de l'autre, avec une armature d'acier (92) introduite dans l'espace (90) entre eux, et que l'espace (90) peut être rempli d'un liant durci, de béton ou de béton léger (95), et au moins une des plaques de construction (1, 1') est pourvue d'une couche d'enduit et d'enduit de plâtre (18), une couche de noyau à fibres diagonales (5) d'une épaisseur de 1 cm en maximum comme décrit à la revendications 1 étant prévue comme support d'enduit pour celle-ci.

21. Elément de parois ou de plafond (9"'),
**caractérisée en ce, qu**'il est formé avec une plaque de construction (1) selon une quelconque des revendications 1 à 13, à au moins une couche de recouvrement (3, 4) de laquelle est lié à l'extérieur une couche de complètement (190), qui est formée avec au moins un panneau léger, une plaque de parement à plâtre ou un panneau minéraux résistant à l'eau ou réfractaire, qui présente des propriétés d'arrêt d'incendie et/ou repoussant l'humidité et l'eau, ou
- qu'il est formé avec une plaque de construction (1) selon une quelconque des revendications 1 à 13, dont la couche de complètement (190) est pourvue à l'extérieur d'un support d'enduit (181) ou avec une couche d'enduit (18) qui comprend ceci.

22. Procédé de fabrication des plaques de construction selon une quelconque des revendications 1 à 13,
dans lequel
- *1.)* on fraise une pluralité des rainures longitudinales (60), parallèles l'une à l'autre et à la direction des fibres de bois, en des planches (58) ou des listeaux de bois en direction d'étendue longitudinale, et ainsi en direction des fibres de bois, avec des écartements l'une de l'autre et en laissant des entretoises parallèles l'une à l'autre,
- *2.)* on dispose les planches (58), pourvues des rainures longitudinales (60), latéralement contiguës par rapport à une ligne centrale (ml) ou à la direction du mouvement progressif du traitement (VR), sous un angle aigu positif (+β) à la ligne centrale (ml), tout en formant un premier pli (L I),
- on applique un deuxième pli (L II) de planches (58) également latéralement contiguës, rainurées de la même manière et ayant un angle aigu négatif (-β) par rapport à la ligne centrale (ml), au premier pli (L I) ainsi formé, et on lie les deux plis L I et L II de planches (58), disposées d'une façon croisée l'une par rapport à l'autre et rainurées, l'un à l'autre, et
- *3.)* on guide la combinaison des planches (58), disposées d'une façon croisée l'une au-dessus de l'autre et rainurées, continuellement en direction du mouvement progressif du traitement (VR) à travers une presse (HP), et on la relie à recevoir une planche à fibres diagonales, **caractérisé en ce,**
- **que** *4.)* on forme des listeaux à fibres diagonales (50, 50') double ou multiples au moyen des coupures (S) espacés l'une de l'autre en correspondance avec l'épaisseur désirée des plaques de construction à fabriquer, perpendiculairement à la ligne centrale (ml) ou à la direction du mouvement progressif du traitement (VR),
- **que** *5.)* chacun des listeaux à fibres diagonales multiples (50, 50') ainsi obtenus est tourné par +90° ou -90° autour de son axe longitudinal en avant ou en arrière,
- **que** *6.)* on encolle les listeaux à fibres diagonales multiples (50, 50') ainsi tournés et on les lie l'un à l'autre étant contigus côté à côté, ainsi formant une couche de noyau à fibres diagonales (5), on les applique à une plaque de recouvrement inférieure (3) de bois ou de matériau de bois, et
- **que** *7.)* on met la plaque de recouvrement supérieure (4) de bois ou de matériau de bois sur les listeaux à fibres diagonales multiples (50, 50') liés l'un à l'autre et à la plaque de recouvrement inférieure (3) ou à la couche de noyau (5) formée avec ceux-ci, et on effectue une liaison par les matières propres de la couche de noyau (5) aux deux plaques de recouvrement (3, 4).

23. Procédé selon la revendication 22 pour la fabrication des plaques de construction selon une quelconque des revendications 1 à 13, dans lequel
- *1.)* on fraise une pluralité des rainures longitudinales (60) parallèles l'une à l'autre et à la direction des fibres de bois en des planches (58) ou des listeaux de bois en direction d'étendue longitudinale, et ainsi en direction des fibres de bois, avec des écartements l'une de l'autre et en laissant des entretoises parallèles l'une à l'autre, de préférence égaux, et
- *2.)* on dispose les planches (58), pourvues des rainures longitudinales (60), avec des rainures (60) ouvertes vers le haut, latéralement contiguës par rapport à une ligne centrale (ml) ou à la direction du mouvement progressif du traitement (VR), sous un angle aigu positif (+β) à la ligne centrale (ml), tout en formant un premier pli (L I), **caractérisé en ce,**
- **que**, dans une étape intermédiaire, on applique un pli intermédiaire (ZI) de bois, ayant des fibres en un angle droit par rapport à la ligne centrale (ml) ou à la direction du mouvement progressif du traitement (VR), aux planches (58) contiguës l'une à l'autre et rainurées du premier pli (L I), et on la lie aux entretoises entre les rainures (60) des planches (58) du premier pli (L I),
- **que** l'on applique un deuxième pli (L II) des planches (58) également étant contiguës latéralement et pourvues de rainures longitudinales (60) avec un angle aigu négatif (-β) par rapport à la ligne centrale (ml) au premier pli (L I) ainsi formé ou à le pli intermédiaire (ZI), avec des rainures (60) ouvertes vers le bas ou vers le pli intermédiaire (ZI), et on lie le premier pli (L I), le pli intermédiaire (71) et le deuxième pli (L II) en nappe l'un à l'autre,
- **que** *3.)* on guide la combinaison décrit tout à l'heure du premier et deuxième pli (L I, L II) des planches rainurées (58) et du pli intermédiaire (71), disposé entre eux, continuellement en direction du mouvement progressif du traitement (VR) à travers une presse (HP), et on la relie à recevoir une planche à fibres diagonales,
- **que** *4.)* on forme des listeaux à fibres diagonales (50, 50') double ou multiples au moyen des coupures de séparation (S) espacés l'une de l'autre, en correspondance avec l'épaisseur désirée des plaques de construction à fabriquer, perpendiculairement à la ligne centrale (ml) ou à la direction du mouvement progressif du traitement (VR),
- **que** *5.)* chacun des listeaux à fibres diagonales multiples (50, 50') est tourné par +90° ou -90° autour de son axe longitudinal en avant ou en arrière,
- **que** *6.)* on encolle les listeaux à fibres diagonales multiples (50, 50') ainsi tournés présentant respectivement entre eux un listeau d'armature (7), et on les lie l'un à l'autre étant contigus côté à côté, formant tous ensemble une couche de noyau à fibres diagonales (5), on les applique à une plaque de recouvrement inférieure (3) de bois ou de matériau de bois, et
- **que** *7.)* on met la plaque de recouvrement supérieure (4) de bois ou de matériau de bois sur la couche de noyau (5) formée avec les listeaux à fibres diagonales multiples (50, 50') avec les listeaux d'armature (7), et on effectue une liaison par les matières propres de la couche de noyau (5) aux deux plaques de recouvrement (3, 4).

24. Procédé selon la revendication 22 ou 23, **caractérisé en ce,**
**qu**'en correspondance avec le principe de la formation de la couche de noyau (5) avec les plis (L I) et (L II), on applique au moins une fois des autres plis (L I) et (L II), formés de la même manière, sur les premiers deux plis (L I) et (L II), et on forme puis la couche de noyau (5) des plaques de construction (1) à partir des listeaux quadruples ou six-fois-listeau, obtenus alors par la coupure de séparation (S).

25. Procédé selon la revendication 22 ou 23, **caractérisé en ce,**
**que** les angles (+β) et (-β) de l'orientation inclinée des planches (58), qui sont continuellement amenées disposées d'une façon croisée l'une au-dessus de l'autre et rainurées ou les fibres desquelles et le rainures longitudinales (60), par rapport à la ligne centrale (ml) ou à la direction du mouvement progressif du traitement (VR) se monte respectivement à plus ou moins [90° moins (25° à 80°, de préférence 30° à 60°)].

26. Procédé selon une quelconque des revendications 22 à 25,
**caractérisée en ce,**
- **que** l'on charge ou asperge, déjà en train de fraisage des rainures longitudinales (60) dans les planches (58) ou listeaux, les rainures (60) avec un agent de pare-flammes, particulièrement avec un polymère intumescent, particulièrement à la base d'un hydrosilicate, en mouillant les parois des rainures et le fond des rainures des cavités inclinées (6, 6') de la couche de noyau (5) de ceux-ci, et/ou que l'on introduit dans les rainures (60) la base pour une matière artificielle, qui peut mousser et mène à un mousse léger par chauffage.

27. Utilisation des plaques de construction selon une quelconque des revendications 1 à 15, ou des éléments de parois ou de plafond selon une quelconque des revendications 16 à 21, ou directement comme des éléments à poids léger, des éléments de séparation et des éléments de support, en particulier comme des parois, des cloisons, des faux plafonds ou des paliers intermédiaires pour des bâtiments neufs, des restructurations, des soutènements des bâtiments mobiles ou non mobiles, des conteneurs, des conteneurs d'habitation, des bâtiments aux éléments préfabriqués, ou comme des panneaux de revêtement, le cas échéant utilisés selon le type d'un coffrage perdu, comme des plaques d'isolation thermique, des plaques d'absorption de son et des plaques d'isolation pour des bâtiments et des structures de bâtiments,
- comme des plaques légères de coffrage dans l'industrie de bâtiment, ou
- pour l'équipement des bâtiments, des parties de bâtiment et des locaux, des greniers ou des caves des bâtiments ayant un habillage ou un revêtement d'isolation thermique et d'insonorisation, ou
- pour l'aménagement intérieur des bâtiments et des locaux, pour des portes palières, et des portes à coulisse ou des portes des sécurité, ou
- pour la construction des maisons, des conteneurs, des navires, des bateaux, des mobilhomes, des caravanes et des roulottes, directement ou comme des « plaques sandwich » pour l'équipement à poids léger des véhicules et des avions, des navires, des bateaux ou des roulottes ainsi que pour des planchers, des habillages, des accessoires ou des meubles encastrés, ou
- pour établir des halls, des cabines, des stands, des superstructures et des soutènements au secteur des foires, des expositions, de présentation et de marché,
- pour la construction de meubles ainsi que pour des objets de conception d'intérieur et d'équipement de bâtiment, ou
- pour la fabrication d'instruments, pour des plaques de résonance et d'oscillation des appareils d'émission sonore, des enceintes ou pour des plafonds et des fonds d'instruments.

28. Utilisation des plaques de construction selon une quelconque des revendications 1 à 15, à condition qu'elles sont formées avec au moins une couche de noyau (5), dont les cavités inclinées sont couvertes dune masse d'ignifugation intumescente sous l'action de chaleur en cas d'incendie, ou qu'elles sont pourvues à un côté d'une plaque minérale incombustible ou d'un revêtement réfractaire, ou qu'au moins une de ses couches de revêtement est formée avec une telle plaque minérale incombustible, pour l'équipement des bâtiments, des parties de bâtiment et des locaux, des greniers ou des caves des bâtiments ayant un revêtement pare-feu, calorifuge et d' insonorisation.
